# EUROPEAN PATENT APPLICATION

(11) **EP 3 667 660 A1**
(43) Date of publication of application: **17.06.2020**
(21) Application number: 18843678.6
(22) Date of filing: 27.07.2018
(51) Int. Cl.: G10L 15/10, G10L 15/04, G10L 15/22

(54) **INFORMATION PROCESSING DEVICE AND INFORMATION PROCESSING METHOD**

(30) Priority: 09.08.2017 JP 2017153883
(71) Applicant: Sony Corporation, Tokyo 108-0075 (JP)
(72) Inventor: SHIBUYA Takashi, Tokyo 108-0075 (JP); AOYAMA Kazumi, Tokyo 108-0075 (JP); MINAMINO Katsuki, Tokyo 108-0075 (JP)
(74) Representative: MFG Patentanwälte Meyer-Wildhagen Meggle-Freund Gerhard PartG mbB
(86) International application number: PCT/JP2018/028201
(87) International publication number: WO 2019/031268

(57) **Abstract**

The present technology relates to an information processing apparatus and an information processing method that make it possible to provide a speech interaction of higher convenience.
An information processing apparatus including a processor is provided, thereby making it possible to provide a speech interaction of higher convenience. The processor couples utterances before and after a pause included in an utterance of a user in accordance with a matching degree between the utterances before and after in terms of a semantic unit. For example, the present technology is applicable to a speech dialog system.

## Description

### Technical Field

The present technology relates to an information processing apparatus and an information processing method, and relates particularly to an information processing apparatus and an information processing method that make it possible to provide a speech interaction of higher convenience.

### Background Art

In recent years, a speech dialog system that performs a response corresponding to au utterance of a user has started to be used in various fields.

For example, when a user asks 'Where am I?' using a speech dialog system, a response 'You are in Central Park' is returned (For example, see PTL 1).

### Citation List

### Patent Literature

PTL 1: Japanese Unexamined Patent Application Publication No. 2016-4270

### Summary of the Invention

### Problems to be Solved by the Invention

Meanwhile, in an apparatus that accepts an instruction by speech, in a case where an utterance of a user includes a 'pause', a conventional spoken-language-understanding program fails to correctly understand an instruction from the user.

In other words, in a speech dialog system, in an apparatus having a speech user interface, first, a signal processing section cuts out, from a speech signal that is constantly inputted into a microphone, a section in which the utterance of the user is recorded. Then, a speech recognition section, using the cut-out speech signal, transcribes a content of the utterance of the user as a character string, and a language understanding section analyzes a content of the instruction from the user using only the transcribed character string, which results in the above accordingly.

When there is a 'pause', the signal processing section cuts out the speech signal before the user finishes saying what is intended, and proceeds to subsequent processing. Even if the user additionally gives some instruction afterwards, only the content is analyzed again, thus failing to cause the apparatus to behave as intended by the user.

Therefore, there is a need for a technique that provides a speech interaction of higher convenience by causing a speech dialog system to behave as intended by a user even in a case where an utterance of the user includes a 'pause'.

The present technology has been conceived in view of such a situation, and makes it possible to provide a speech interaction of higher convenience.

### Means for Solving the Problems

An information processing apparatus according to a first aspect of the present technology is an information processing apparatus including a processor that couples utterances before and after a pause in accordance with a matching degree between the utterances before and after the pause in terms of a semantic unit. The pause is included in an utterance of a user.

An information processing method according to the first aspect of the present technology is an information processing method for an information processing apparatus. The information processing method includes, by the information processing apparatus, coupling utterances before and after a pause in accordance with a matching degree between the utterances before and after the pause in terms of a semantic unit. The pause is included in an utterance of a user.

In the information processing apparatus and information processing method according to the first aspect of the present technology, utterances before and after a pause are coupled in accordance with a matching degree between the utterances before and after the pause in terms of a semantic unit. The pause is included in an utterance of a user.

An information processing apparatus according to a second aspect of the present technology is an information processing apparatus including: a processor that extracts, from past utterance histories of a user, a past utterance history that matches spoken-language understanding processing on an utterance including a pause; and a transmission section that transmits the extracted past utterance history to an information processing apparatus along with a speech signal corresponding to a current utterance of the user. The information processing apparatus performs the spoken-language understanding processing.

An information processing method according to the second aspect of the present disclosure is an information processing method for an information processing apparatus. The information processing method includes, by the information processing apparatus: extracting, from past utterance histories of a user, a past utterance history that matches spoken-language understanding processing on an utterance including a pause; and transmitting the extracted past utterance history to an information processing apparatus along with a speech signal corresponding to a current utterance of the user. The information processing apparatus performs the spoken-language understanding processing.

In the information processing apparatus and information processing method according to the second aspect of the present technology, a past utterance history is extracted from past utterance histories of a user. The past utterance history matches spoken-language understanding processing on an utterance including a pause. The extracted past utterance history is transmitted to an information processing apparatus along with a speech signal corresponding to a current utterance of the user. The information processing apparatus performs the spoken-language understanding processing.

The information processing apparatus according to each of the first and the second aspects of the present technology may be an independent apparatus or may be an internal block included in one apparatus.

### Effects of the Invention

According to the first and the second aspects of the present technology, it is possible to provide a speech interaction of higher convenience.

It should be noted that the effects described here are not necessarily limitative, but may be any of effects described in the present disclosure.

### Brief Description of Drawing

[FIG. 1] FIG. 1 is a block diagram that illustrates an example of a configuration of a speech dialog system to which the present technology is applied.
[FIG. 2] FIG. 2 is a block diagram that illustrates an example of a configuration of a speech processing apparatus.
[FIG. 3] FIG. 3 is a block diagram that illustrates an example of a configuration of a server.
[FIG. 4] FIG. 4 is a block diagram that illustrates an example of a functional configuration of the speech dialog system to which the present technology is applied.
[FIG. 5] FIG. 5 is a diagram that illustrates an example of voice activity detection (VAD) in a waveform of a speech signal.
[FIG. 6] FIG. 6 is a diagram that illustrates an example of an output from a speech-recognition and spoken-language-understanding program API.
[FIG. 7] FIG. 7 is a diagram that illustrates an example of a waveform of a speech signal in a case of making an utterance while making a 'pause'.
[FIG. 8] FIG. 8 is a diagram that illustrates an example of an output from the speech-recognition and spoken-language-understanding program API in a case of making an utterance while making a 'pause'.
[FIG. 9] FIG. 9 is a diagram that illustrates an example of an output from the speech-recognition and spoken-language-understanding program API in a case of failing to identify a speaker.
[FIG. 10] FIG. 10 is a diagram that illustrates an example of history information regarding an utterance.
[FIG. 11] FIG. 11 is a diagram that illustrates an example of an output from a speech-recognition and spoken-language-understanding program API according to the present technology.
[FIG. 12] FIG. 12 is a diagram that illustrates an example of the history information regarding an utterance.
[FIG. 13] FIG. 13 is a diagram that illustrates an example of the output from the speech-recognition and spoken-language-understanding program API according to the present technology.
[FIG. 14] FIG. 14 is a diagram that illustrates an example of the history information regarding an utterance.
[FIG. 15] FIG. 15 is a diagram that illustrates an example of the output from the speech-recognition and spoken-language-understanding program API according to the present technology.
[FIG. 16] FIG. 16 is a flowchart that describes a flow of general spoken-language understanding processing.
[FIG. 17] FIG. 17 is a diagram that illustrates an example of interpretation and conversion of a parameter (example before conversion).
[FIG. 18] FIG. 18 is a diagram that illustrates an example of interpretation and conversion of a parameter (example after conversion).
[FIG. 19] FIG. 19 is a diagram that illustrates an example of an analysis result of an input hypothesis.
[FIG. 20] FIG. 20 is a diagram that illustrates an example of the analysis result of the input hypothesis.
[FIG. 21] FIG. 21 is a flowchart that describes a flow of spoken-language understanding processing according to the present technology.
[FIG. 22] FIG. 22 is a diagram that illustrates an example of the waveform of the speech signal in the case of making an utterance while making a 'pause'.
[FIG. 23] FIG. 23 is a diagram that illustrates an example of a score obtained for each input hypothesis.
[FIG. 24] FIG. 24 is a diagram that illustrates an example of other sensor information.
[FIG. 25] FIG. 25 is a diagram that illustrates an example of the history information regarding an utterance.
[FIG. 26] FIG. 26 is a diagram that illustrates an example of the output from the speech-recognition and spoken-language-understanding program API according to the present technology.
[FIG. 27] FIG. 27 is a flowchart that describes a flow of speech dialog processing.
[FIG. 28] FIG. 28 is a diagram that illustrates an example of a configuration of a computer.

### Modes for Carrying Out the Invention

Hereinafter, embodiments of the present technology are described with reference to the drawings. It should be noted that the description is given in the following order.
1. System Configuration
2. Premise Technique
3. Embodiments of the Present Technology
   (1) First Embodiment: Spoken-Language Understanding Processing Using Utterance History Information
   (2) Second Embodiment: Spoken-Language Understanding Processing Using Sensor Information
4. Modification Example
5. Configuration of Computer

### <1. System Configuration>

### (Configuration of Speech Dialog System)

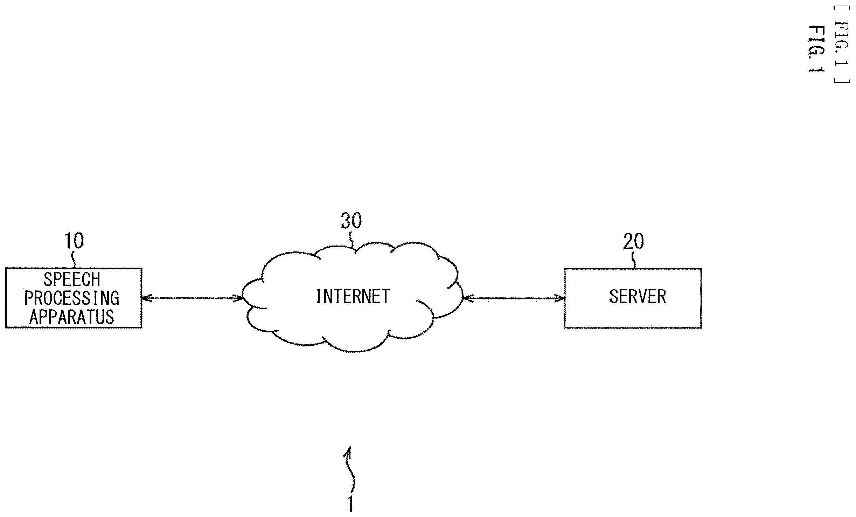

FIG. 1 is a block diagram that illustrates an example of a configuration of a speech dialog system to which the present technology is applied.

It is possible to configure a speech dialog system 1 to include a speech processing apparatus 10 that is installed on a local side such as a house of a user and functions as a user interface for a speech dialog service, and a server 20 that is installed on a cloud side such as a data center and performs processing to achieve a speech dialog function.

In the speech dialog system 1, the speech processing apparatus 10 and the server 20 are coupled to each other via an Internet 30.

For example, the speech processing apparatus 10 is a speaker that is allowed to be coupled to a network such as home LAN (Local Area Network), and is also referred to as what is called a smart speaker or the like. For example, other than reproduction of music, this type of speaker is able to perform a speech operation, etc. on an apparatus such as a lighting apparatus and an air conditioner.

It should be noted that the speech processing apparatus 10 is not limited to a speaker, but may also be configured as, for example, a mobile device such as a smartphone or a mobile phone, a tablet-type computer, or the like.

The speech processing apparatus 10 works in cooperation with the server 20 via the Internet 30, thereby making it possible to provide (a user interface for) a speech dialog service to a user.

In other words, the speech processing apparatus 10 collects a speech uttered by a user (user utterance), and transmits a speech signal thereof to the server 20 via the Internet 30. In addition, the speech processing apparatus 10 receives processing data transmitted from the server 20 via the Internet, and outputs a speech corresponding to the processing data.

The server 20 is a server that provides a cloud-based speech dialog service.

The server 20 performs speech recognition processing to convert, into text data, the speech signal transmitted from the speech processing apparatus 10 via the Internet 30. In addition, the server 20 performs processing such as spoken-language understanding processing on a speech recognition result (text data), and transmits, to the speech processing apparatus 10 via the Internet 30, processing data that is obtained as a result of the processing.

### (Configuration of Speech Processing Apparatus)

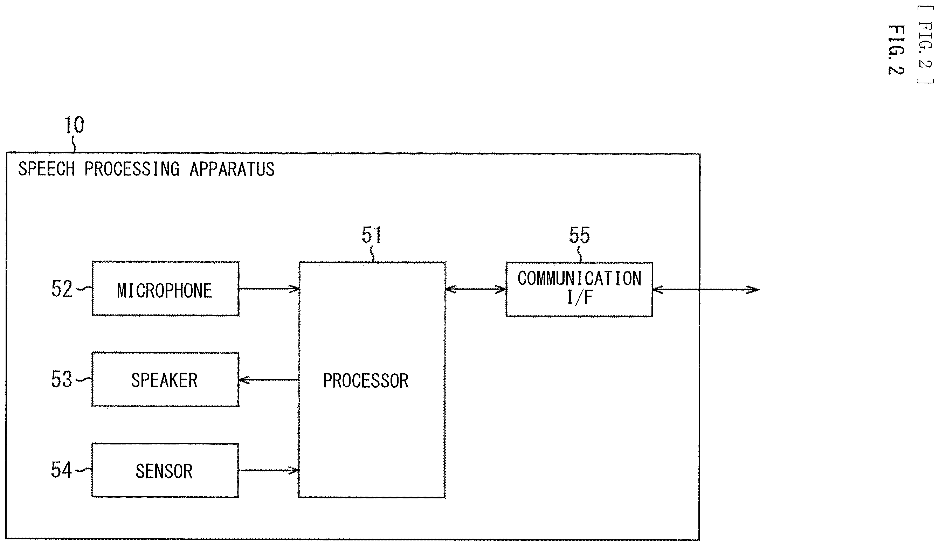

FIG. 2 is a block diagram that illustrates an example of a configuration of the speech processing apparatus 10 in FIG. 1.

In FIG. 2, the speech processing apparatus 10 includes a processor 51, a microphone 52, a speaker 53, a sensor 54, and a communication I/F 55.

For example, the processor 51 includes CPU (Central Processing Unit), a microprocessor, and the like. The processor 51 operates as a main processor in the speech processing apparatus 10, performing various types of arithmetic processing, operation control of each section, etc.

The microphone 52 is a device (sound collector) that converts a sound from the outside into an electric signal. The microphone 52 supplies the processor 51 with a speech signal obtained through the conversion.

The speaker 53 is a device that outputs a sound by converting an electric signal into a physical vibration. The speaker 53 outputs a sound corresponding to a speech signal supplied from the processor 51.

The sensor 54 includes various types of sensors. The sensor 54 performs sensing, and supplies the processor 51 with sensor information (sensor data) corresponding to a result of the sensing.

For example, it is possible to include, as the sensor 54, various types of sensors such as an image sensor that images an object, a magnetic sensor that detects a size and a direction of a magnetic field (Magnetic Field), an acceleration sensor that detects acceleration, a gyro sensor that detects an angle (posture), an angular velocity, and an angular acceleration, a proximity sensor that detects an adjacent object, or a biosensor that detects biological information such as a fingerprint, an iris, or a pulse.

In addition, it is possible to include, in the sensor 54, a sensor for measuring a surrounding environment such as a temperature sensor that detects temperature, a humidity sensor that detects humidity, an ambient light sensor that detects brightness of a surrounding environment. It should be noted that sensor data may include various types of information such as position information (position data) calculated from a GPS (Global Positioning System) signal and so on, or time information counted by a time counting means.

The communication I/F 55 includes, for example, a communication interface circuit and the like. In accordance with control from the processor 51, the communication I/F 55 accesses the server 20 coupled to the Internet 30 to exchange various types of data.

Here, for example, the processor 51 has a portion of functions provided by the speech dialog system 1 (FIG. 1).

In other words, the processor 51 performs predetermined signal processing on a speech signal supplied from the microphone 52, and supplies the communication I/F 55 with a speech signal that is obtained as a result. This causes the speech signal of an utterance of a user to be transmitted to the server 20 via the Internet 30. In addition, the processor 51 is able to supply sensor data to the communication I/F 55 to transmit the sensor data to the server 20 via the Internet 30.

In addition, the processor 51 processes a speech signal supplied from the communication I/F 55, and supplies the speaker 53 with a speech signal that is obtained as a result. This causes the speaker 53 to output a response speech corresponding to (a speech signal of) a system response.

It should be noted that, although not illustrated in FIG. 2, the speech processing apparatus 10 may further include a display section for displaying various types of information (for example, text, an image, etc.), an input section that accepts an operation from a user, a storage section that holds various types of data (for example, speech data, text data, etc.), or the like.

Here, the display section includes, for example, a liquid crystal display, an organic EL display, or the like. The input section includes, for example, a button, a keyboard, or the like. In addition, the input section may be configured as a touch panel in which a touch sensor and a display section are integrated, and allow an operation signal to be obtained that corresponds to an operation by a finger of a user or a touch pen (stylus pen). The storage section includes, for example, a flash memory (Flash Memory) that is a type of non-volatile memory, DRAM (Dynamic Random Access Memory) that is a type of volatile memory, or the like.

### (Configuration of Server)

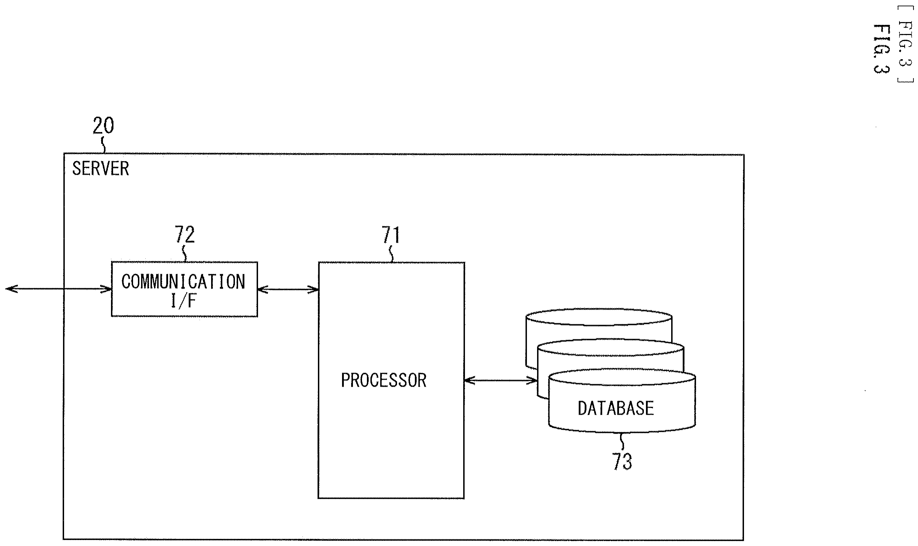

FIG. 3 is a block diagram that illustrates an example of a configuration of the server 20 in FIG. 1.

In FIG. 3, the server 20 includes a processor 71, a communication I/F 72, and a database 73.

The processor 71 includes, for example, CPU, a microprocessor, or the like. The processor 71 operates as a main processor in the server 20, performing various types of arithmetic processing, operation control of each section, etc.

The communication I/F 72 includes, for example, a communication interface circuit and the like. In accordance with control from the processor 71, the communication I/F 72 exchanges various types of data with the speech processing apparatus 10 that is coupled to the communication I/F 72 via the Internet 30.

For example, the database 73 is configured as a large-volume storage device such as a hard disk (HDD: Hard Disk Drive), a semiconductor memory, or an optical disk.

For example, the database 73 includes a speech-recognition database for performing speech recognition processing, a spoken-language understanding database for performing spoken-language understanding processing, and so on. It should be noted that each of the speech-recognition database and the spoken-language understanding database is an example of a database, and it is possible to include a database (for example, a knowledge database, an utterance database, a dialog history database, and so on) that is necessary to achieve a speech dialog service.

Here, for example, the processor 71 has a portion of functions provided by the speech dialog system 1 (FIG. 1).

In other words, with reference to the speech-recognition database included in the database 73, the processor 71 performs processing such as speech recognition processing or spoken-language understanding processing that converts, into text data, a speech signal of an utterance of a user that is transmitted from the speech processing apparatus 10 via the Internet 30. This causes a system response to a user to be generated and transmitted to the speech processing apparatus 10 as processing data via the Internet 30.

### (Example of Functional Configuration of Speech Dialog System)

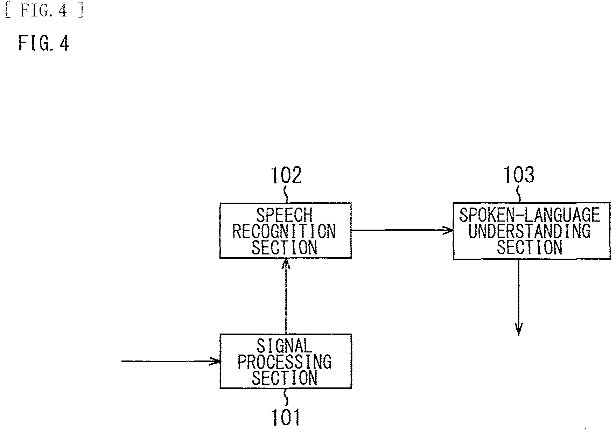

FIG. 4 is a block diagram that illustrates an example of a functional configuration of the speech dialog system to which the present technology is applied.

As illustrated in FIG. 4, the speech dialog system 1 includes a signal processing section 101, a speech recognition section 102, and a spoken-language understanding section 103.

To the signal processing section 101, a speech signal obtained by converting a sound collected by the microphone 52 is inputted. The signal processing section 101 performs predetermined signal processing on the inputted speech signal, and supplies the speech recognition section 102 with a speech signal that is obtained as a result.

For example, as the signal processing performed by the signal processing section 101, processing that cuts out a section in which a user makes an utterance or processing that removes noise from a speech signal is performed.

With reference to a speech-text conversion database and so on, the speech recognition section 102 performs speech recognition processing that converts the speech signal supplied from the signal processing section 101 into text data. The speech recognition section 102 supplies the spoken-language understanding section 103 with a speech recognition result (text data of an utterance) that is obtained as a result of the speech recognition processing.

The spoken-language understanding section 103 performs predetermined spoken-language understanding processing on the speech recognition result supplied from the speech recognition section 102, and supplies a processor (not illustrated) in a subsequent stage with an analysis result of a content of a speech input that is obtained as a result.

As the spoken-language understanding processing performed by the spoken-language understanding section 103, for example, processing that converts a speech recognition result (text data of an utterance) that is a natural language into an expression understandable to a machine is performed.

It should be noted that the signal processing section 101 is assumed to be incorporated in the processor 51 (FIG. 2) in the speech processing apparatus 10 on a local side, and the speech recognition section 102 and the spoken-language understanding section 103 are assumed to be incorporated in the processor 71 (FIG. 3) in the server 20 on a cloud side because of a need for a large-capacity memory or storage.

In addition, although not illustrated, for example, the processor (not illustrated) provided in a subsequent stage of the spoken-language understanding section 103 performs processing, for example, such as dialog control processing as processing based on the analysis result from the spoken-language understanding section 103, making it possible to generate a system response to a user.

It should be noted that, for convenience of description, in the speech dialog system 1 in FIG. 1, a case of providing one speech processing apparatus 10 is illustrated, but it is possible, for example, to provide a plurality of speech processing apparatuses 10 for respective users.

In addition, in the speech dialog system 1 in FIG. 1, a case of providing one server 20 is illustrated, but, for example, it is possible to provide a plurality of servers 20 for respective functions (modules). More specifically, for example, it is possible to provide, as a separate server 20, a server 20 having a speech recognition module corresponding to the speech recognition section 102, a server 20 having a spoken-language understanding module corresponding to the spoken-language understanding section 103, and so on.

### <2. Premise Technique>

Usually, in an apparatus having a speech interface, signal processing by the signal processing section 101, speech recognition processing by the speech recognition section 102, and spoken-language understanding processing by the spoken-language understanding section 103 are performed in this order. It should be noted that a main target of the present technology is speech recognition processing and spoken-language understanding processing, but to facilitate understanding of a content of the present technology, a content of the signal processing by the signal processing section 101 is also described.

The signal processing section 101 mainly performs two types of processing. First processing is processing that cuts out, from a speech signal constantly inputted to the microphone 52, only a time section in which a user makes an utterance. This processing is referred to as voice activity detection (VAD: Voice Activity Detection). Second processing is processing that suppresses noise and emphasizes a speech of a user to make it possible to correctly perform speech recognition even in an environment having a large noise. This processing is referred to as speech enhancement (Speech Enhancement).

Here, a point to note is that the voice activity detection (VAD) is determined (decided) only by a physical characteristic of an input signal. In other words, on the basis of an amplitude or a frequency characteristic of an inputted sound, the processing sequentially determines whether or not a major component of the inputted sound is a speech, and cuts out a section in which the speech is continuously inputted in terms of time.

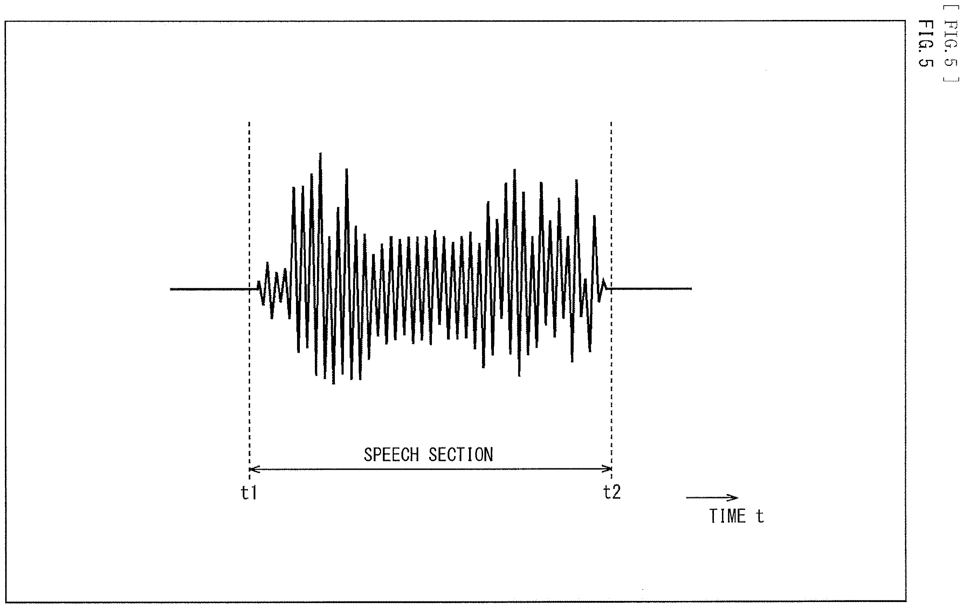

FIG. 5 is a diagram that illustrates an example of voice activity detection (VAD) in a waveform of a speech signal. FIG. 5 illustrates a waveform of a speech signal of an utterance of a user when assuming a vertical direction to represent an amplitude and a horizontal direction to represent time.

In the signal processing section 101, a section from a start time t1 to an end time t2 is cut out from the waveform of the speech signal, as the section in which a speech is continuously inputted in terms of time. In other words, in the waveform of the speech signal illustrated in FIG. 5, the processing that cuts out the section from the start time t1 to the end time t2 is the voice activity detection (VAD).

Here, a period from when an input of a speech is detected to when the input of the speech stops is cut out. In many types of voice activity detection, in a case where it is determined that an input stops for about 500 milliseconds, the input of the speech is determined to be finished, and a signal is cut out. For example, a mora phoneme (geminate consonant) such as small 'tsu' in 'kitte' produces no sound for a very short time (about 200 to 300 milliseconds), and therefore a numerical value of 500 milliseconds is set to prevent the speech signal from being cut at this point.

Meanwhile, the speech recognition section 102 transcribes the speech cut out by the signal processing section 101 into a text (speech recognition result) having a content of an utterance actually made by the user. This speech recognition result (text data of an utterance) is a natural language, but this is finally converted by the spoken-language understanding section 103 into an expression understandable to a machine.

For example, in a case where a user utters 'Tell me the weather in Fukushima tomorrow', it is interpreted that a "user intention" is 'checking the weather (Check Weather)', and in a case where it is March 31, 2017 today, it is interpreted that a "date" that the user wants to check the weather for is 'April 1, 2017' and a "place" is 'Fukushima'. The spoken-language understanding section 103 estimates the "user intention" from a natural language, and performs processing that analyzes a parameter thereof (here, the 'date' and the 'place').

For example, an input (IN1) and an output (OUT1) to and from API of a program (hereinafter, also referred to as a speech-recognition and spoken-language-understanding program API) having these functions of speech recognition and spoken language understanding are as follows.

### <Input (IN1)>

• Cut-out speech signal
• Time at which cutting out is started, and time at which cutting out is completed

For example, a waveform of a speech signal in the section from the start time t1 to the end time t2 that is cut out by the voice activity detection (VAD) illustrated in FIG. 5 corresponds to the cut-out speech signal. In addition, the time at which cutting out is started corresponds to the start time t1 in FIG. 5, and the time at which cutting out is completed corresponds to the end time t2 in FIG. 5. It should be noted that it is also possible to consider, as a current time, the time at which cutting out is completed.

### <Output (OUT1)>

• Speech recognition result
• Semantic frame list

### User intention (intent)

### Parameter (SlotSet)

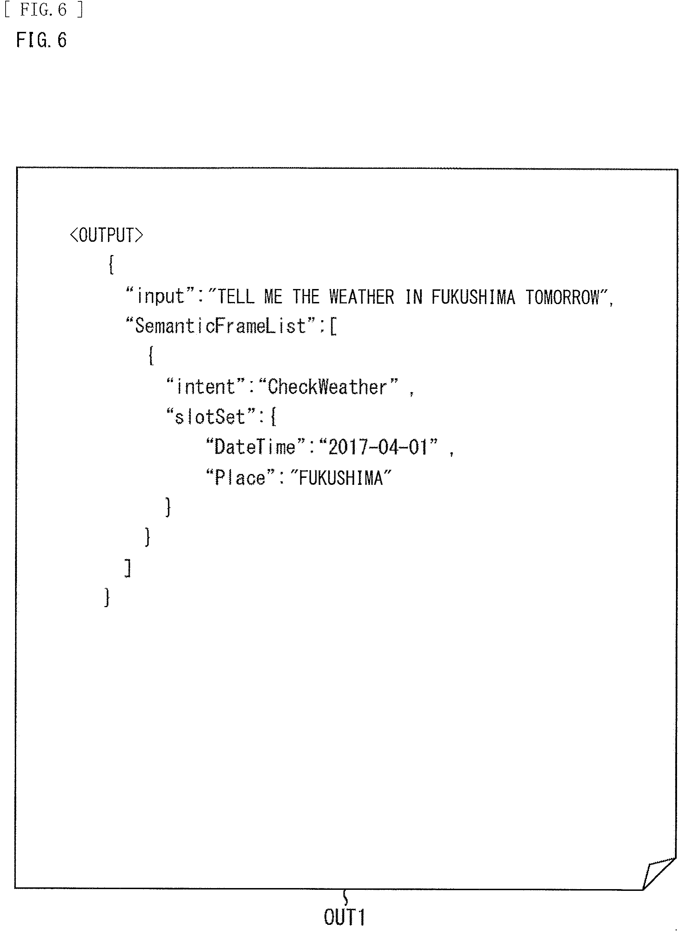

Here, FIG. 6 illustrates an example (OUT1) of the output from the speech-recognition and spoken-language-understanding program API that performs processing on the input (IN1).

It should be noted that the example of the output illustrated in FIG. 6 is described in accordance with JSON (JavaScript (registered trademark) Object Notation) that is a type of text format. An object in a JSON format is expressed by making a pair of a key and a value using a colon (:), enumerating zero or more of these pairs by separating by a comma (,), and enclosing all of these in curly brackets ({ }). In addition, an ordered list of an object and a value is expressed by enumerating, by separating by a comma (,) zero or more of the objects and the values and enclosing these in square brackets ([]).

"input" represents a speech recognition result of an inputted speech signal. Here, speech recognition processing is performed on the cut-out speech signal, and a speech recognition result (text data of an utterance) that is "Tell me the weather in Fukushima tomorrow" is obtained.

"SemanticFrameList" represents a list of a semantic frame (Semantic Frame), and here includes "intent" and "slotSet" as objects thereof.

"intent" represents an intention of a user. Here, a user intention "CheckWeather" that is 'checking the weather' is set.

"slotSet" stores a parameter. In a case of "CheckWeather", "DateTime" that represents a date and time and "Place" that represents a place are set as "slotSet". Here, "2017-04-01" is set as "DateTime", and "Fukushima" is set as "Place".

It should be noted that a content of "slotSet" that is a parameter varies depending on "intent". For example, in a case where the user intention is "PlayMusic" that is 'music reproduction', a parameter "Track" for a music title is likely to be taken, while the parameter "Track" for a music title is least likely to be taken for "CheckWeather".

Here, an interpretation of a word 'Fukushima' plays a key role. It is not possible to determine whether or not a proper noun 'Fukushima' alone is a person's name, a place name, or a name of a restaurant, etc. In a context intended to check the weather, it is possible to determine that 'Fukushima' is highly likely to be a place name. On the other hand, for example, 'Fukushima' in a case of an utterance 'Please e-mail to Fukushima' is highly likely to be a person's name.

Meanwhile, in such a premise technique, only a current input is considered. Therefore, for example, in a case where a user makes an utterance such as 'In Fukushima ... tell me the weather tomorrow' while making a 'pause' after 'In Fukushima', 'In Fukushima' and 'tell me the weather tomorrow' are separately interpreted.

It should be noted that, in the present specification, a notation of '...' included in an utterance of a user represents a 'pause' in the utterance.

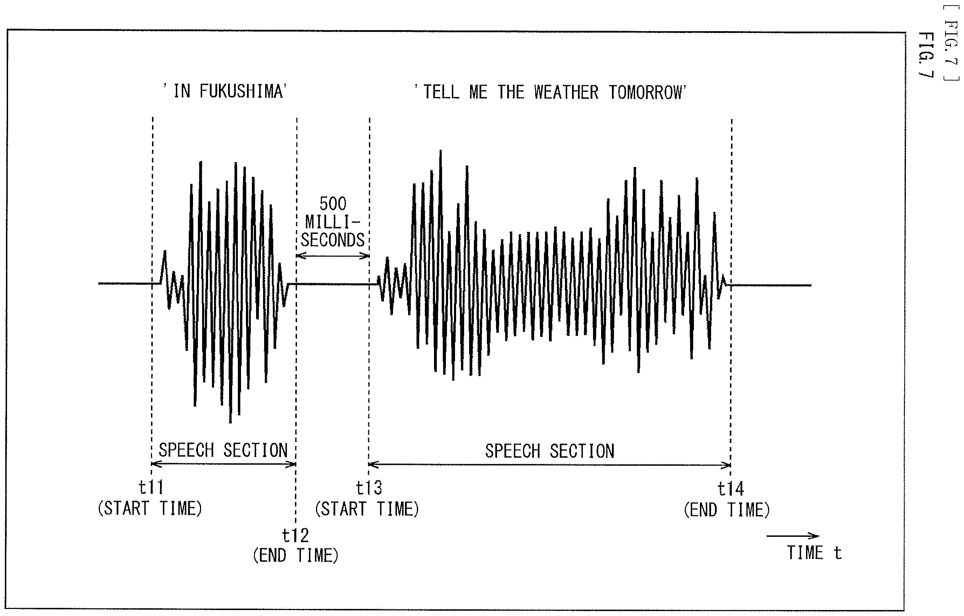

FIG. 7 is a diagram that illustrates an example of a waveform of a speech signal in a case of making an utterance while making a 'pause'. FIG. 7 illustrates a waveform of a speech signal of the utterance 'In Fukushima ... tell me the weather tomorrow', in which 'In Fukushima' is followed by a 'pause', and the input stops for about 500 milliseconds.

Thus, in the signal processing section 101, a section from a start time t11 to an end time t12 that corresponds to an utterance of 'In Fukushima' and a section from a start time t13 to an end time t14 that corresponds to an utterance of 'tell me the weather tomorrow' are cut out as separate speech sections.

At this time, for example, an input (IN2) and an output (OUT2) to and from the speech-recognition and spoken-language-understanding program API are as follows.

### <Input (IN2)>

• Cut-out speech signal
• Time at which cutting out is started, and time at which cutting out is completed

For example, a waveform of a speech signal in the section that is cut out by the voice activity detection (VAD) illustrated in FIG. 7 and corresponds to 'In Fukushima' corresponds to the cut-out speech signal, and is a first input (IN2-1). In this first input, the time at which cutting out is started corresponds to the start time t11 in FIG. 7, and the time at which cutting out is completed corresponds to the end time t12 in FIG. 7.

In addition, a waveform of a speech signal in the section that is cut out by the voice activity detection (VAD) illustrated in FIG. 7 and corresponds to 'tell me the weather tomorrow' corresponds to the cut-out speech signal, and is a second input (IN2-2). In this second input, the time at which cutting out is started corresponds to the start time t13 in FIG. 7, and the time at which cutting out is completed corresponds to the end time t14 in FIG. 7.

### <Output (OUT2)>

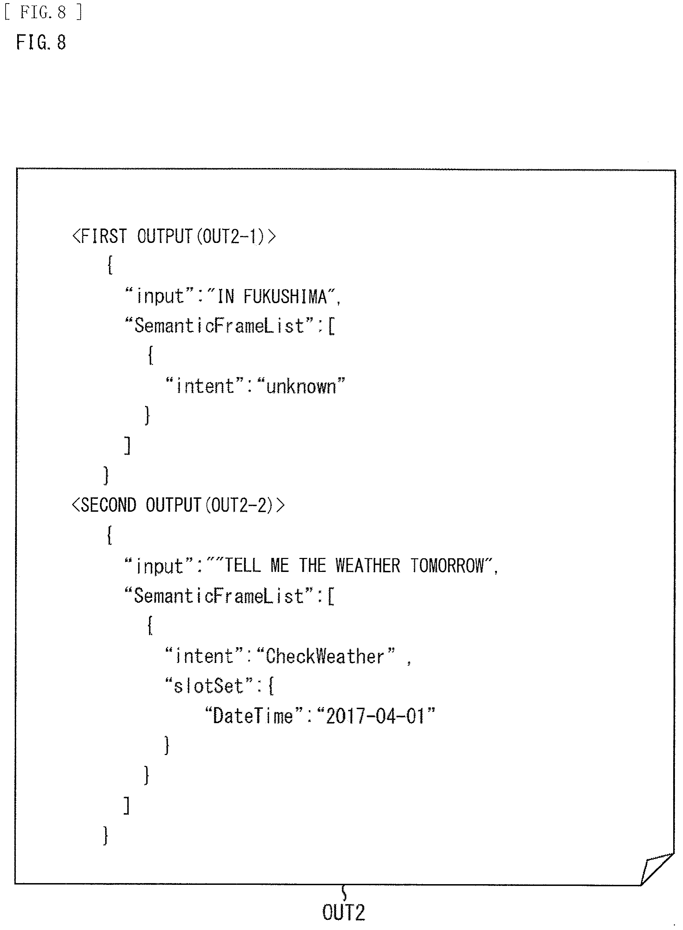

Here, FIG. 8 illustrates an example (OUT2) of the output from the speech-recognition and spoken-language-understanding program API that performs processing on the input (IN2).

FIG. 8 illustrates, as a first output (OUT2-1), a speech recognition result (text data of an utterance) that is obtained from the speech signal in the section corresponding to "In Fukushima" that is the first input (IN2-1). In this first output, 'In Fukushima' alone fails to indicate the intention of the user, causing "intent" to be "unknown".

In addition, as a second output (OUT2-2), a speech recognition result is illustrated that is obtained from the speech signal in the section corresponding to "tell me the weather tomorrow" that is the second input (IN2-2). In this second output, "CheckWeather" that is 'checking the weather' is set as the intention ("intent") of the user, and "DateTime" is set as a parameter ("slotSet") thereof. In other words, in a case of analyzing only 'tell me the weather tomorrow', 'Fukushima' that is the place ("Place") intended by the user is not analyzed.

In this manner, when there is a 'pause' in the utterance of the user, 'In Fukushima' and 'tell me the weather tomorrow' are separately interpreted, failing to correctly read the intention of the user.

In addition, for example, in a case where the speech processing apparatus 10 such as a smart speaker is an apparatus shared among family members, and in a case where a user utters 'I want to check my schedule for next week' to the apparatus, an input (IN3) and an output (OUT3) to and from the speech-recognition and spoken-language-understanding program API are as follows.

### <Input (IN3)>

• Cut-out speech signal
• Time at which cutting out is started, and time at which cutting out is completed

For example, a waveform of a speech signal in a section that is cut out by the voice activity detection (VAD) and corresponds to 'I want to check my schedule for next week' corresponds to the cut-out speech signal. In addition, a time of the head of the cut-out section corresponds to the time at which cutting out is started, and a time of the tail of the cut-out section corresponds to the time at which cutting out is completed.

### <Output (OUT3)>

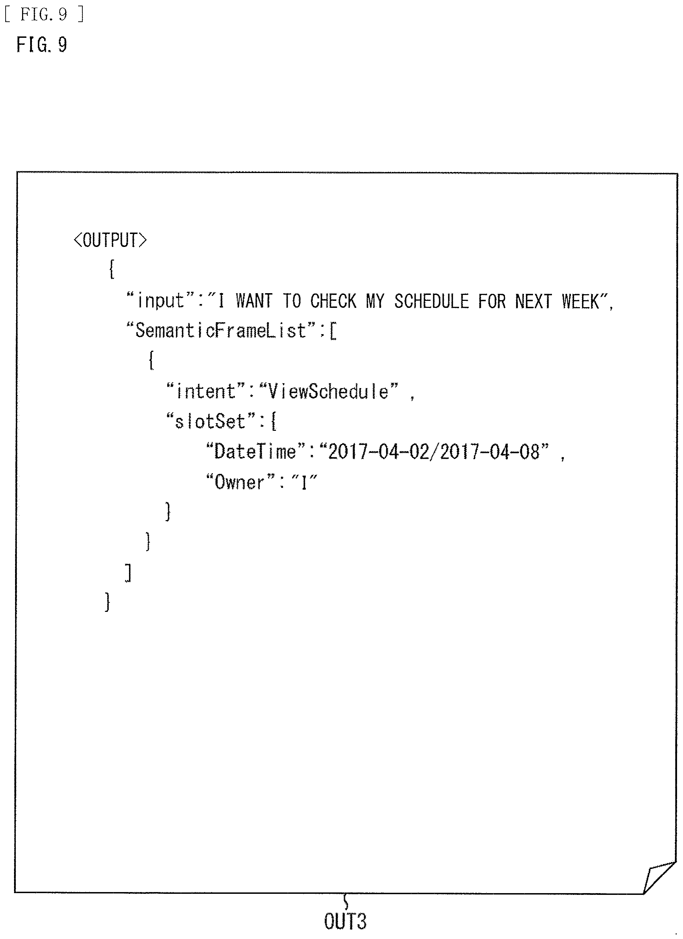

Here, FIG. 9 illustrates an example (OUT3) of the output from the speech-recognition and spoken-language-understanding program API that performs processing on the input (IN3).

FIG. 9 illustrates a speech recognition result (text data of an utterance) that is obtained from the speech signal in the section that corresponds to "I want to check my schedule for next week". In this output, "ViewSchedule" that is 'schedule display' is set as the intention ("intent") of the user, and "DateTime" and "Owner" are set as parameters ("slotSet") thereof. Here, "2017-04-02/2017-04-08" is set as "DateTime", and "I" is set as "Owner".

"Owner" represents an owner of a schedule. In this example, 'I' is the owner of the schedule. An application that receives this has to interpret the word 'I'. Here, it is necessary to solve an issue of which one of users registered in the schedule is 'I', using knowledge that 'I' is first-person.

In this manner, in a case where an utterance of a user includes, for example, a demonstrative or a relative expression such as 'I' or 'this town', there is a case where language information alone does not allow the content indicated by it to be clarified, failing to correctly read the intention of the user.

Therefore, the present technology provides an analysis method that makes it possible to correctly understand a content of an instruction from a user using a history of a content of an utterance of the user even in a case where the utterance of the user includes a 'pause'. In addition, for example, in a case where an utterance of a user includes a demonstrative or a relative expression such as 'I' or 'this town', there is a case where language information alone does not allow the content indicated by it to be clarified. In that case, information such as an analysis result of a camera image or position information obtained by GPS (Global Positioning System) is used, thereby making it possible to analyze the content.

In the following, a content of the present technology is described with reference to embodiments of the present technology.

### <3. Embodiments of the Present Technology>

### (1) First Embodiment

The present technology, using the most recent utterance history, makes it possible to determine (decide) a semantic connection or break, and correctly understand an intention of a user even if an utterance of the user includes a 'pause'. At this time, to an input to the speech-recognition and spoken-language-understanding program API according to the present technology, utterance history information is added as follows.

### <Input>

• Cut-out speech signal
• Time at which cutting out is started, and time at which cutting out is completed
• Utterance history information (character string of a speech recognition result, and start time of cutting out of a corresponding speech signal)

Here, for example, is the following illustrates an example of an input and an output in a case where a user makes an utterance while making a 'pause' like 'In Fukushima ... tell me the weather ... this weekend'. For example, when uttering 'In Fukushima' first, and then uttering 'tell me the weather', an input (IN4) and an output (OUT4) to and from the speech-recognition and spoken-language-understanding program API are as follows.

### <Input (IN4)>

• Cut-out speech signal
• Time at which cutting out is started, and time at which cutting out is completed
• Utterance history information

For example, a waveform of a speech signal in a section that is cut out by the voice activity detection (VAD) and corresponds to 'tell me the weather' corresponds to the cut-out speech signal. In addition, a time of the head of the cut-out section corresponds to the time at which cutting out is started, and a time of the tail of the cut-out section corresponds to the time at which cutting out is completed.

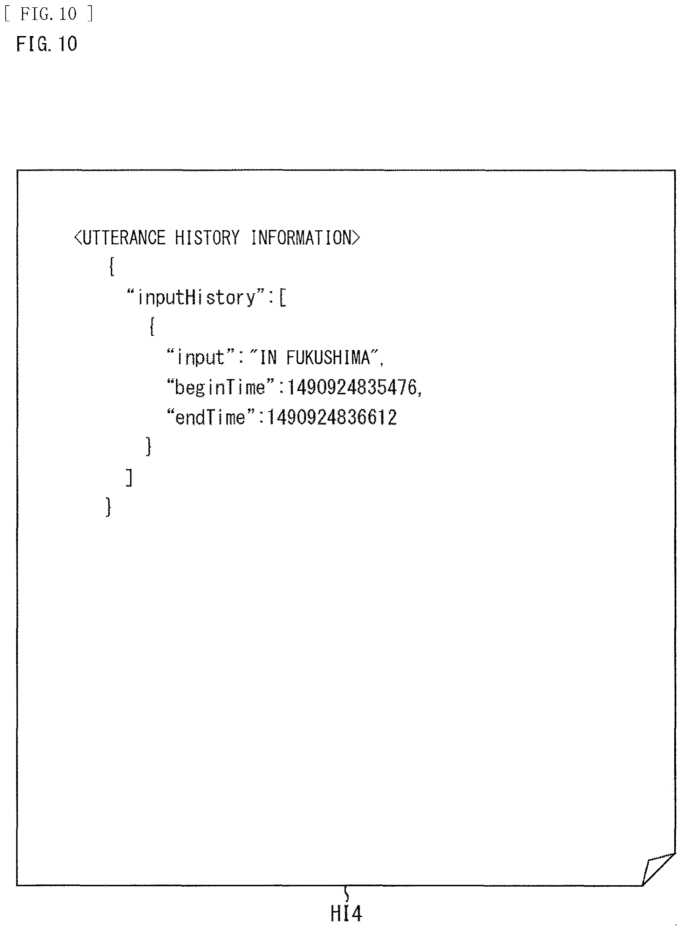

In addition, utterance history information includes, as a past utterance history, a character string of a speech recognition result and a start time of cutting out of a corresponding speech signal, which has a content as illustrated in FIG. 10, for example.

### <Utterance History Information (HI4)>

FIG. 10 is a diagram that illustrates an example of utterance history information.

"inputHistory" represents an utterance history, and here includes "input", and "beginTime" and "endTime" as objects thereof.

For "input", a character string of a speech recognition result is set as an utterance history. Here, a speech recognition result (text data of an utterance) of 'In Fukushima' that is uttered before 'tell me the weather' with a 'pause' in between is set as a history.

"beginTime" and "endTime" are time information regarding a start and an end of an utterance, and is a data representation in a format commonly used by a calculator called UNIX (registered trademark) epoch milliseconds. Here, as the start time of the speech 'In Fukushima', time information " 1490924835476" is set, and time information " 1490924836612" is set as the end time of the speech.

### <Output (OUT4)>

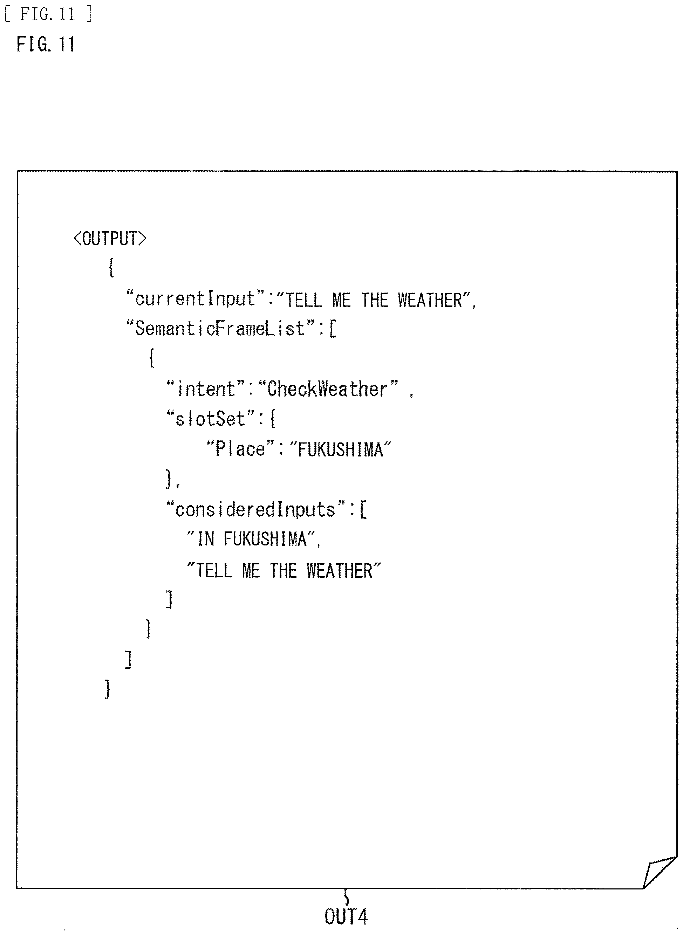

FIG. 11 is a diagram that illustrates an example (OUT4) of an output from the speech-recognition and spoken-language-understanding program API that performs processing on the input (IN4) including utterance history information (HI4).

"currentlnput" represents a speech recognition result of an inputted speech signal. Here, speech recognition processing is performed on the cut-out speech signal, and a speech recognition result (text data of an utterance) that is "tell me the weather" is obtained.

As an object of "SemanticFrameList", "intent", "slotSet", and "consideredlnputs" are included. Here, "CheckWeather" that is 'checking the weather' is set as the intention ("intent") of the user, and "Place" that is "Fukushima" is set as a parameter ("slotSet") thereof.

"consideredlnputs" is an input used to estimate "intent" or "slotSet". Here, "consideredlnputs" indicates that "In Fukushima" and "tell me the weather" are used when estimating "intent" that is "CheckWeather" and "Place" that is "Fukushima". In other words, not only the most recent speech recognition result that is "tell me the weather", but the utterance history information (HI4) that is "In Fukushima" are used to estimate "intent" and "slotSet".

Next, for example, when 'tell me the weather' is uttered, and then 'this weekend' is uttered after a 'pause', an input (IN5) and an output (OUT5) to and from the speech-recognition and spoken-language-understanding program API are as follows.

### <Input (IN5)>

• Cut-out speech signal
• Time at which cutting out is started, and time at which cutting out is completed
• Utterance history information

For example, a waveform of a speech signal in a section that is cut out by the voice activity detection (VAD) and corresponds to 'this weekend' corresponds to the cut-out speech signal. In addition, a time of the head of the cut-out section corresponds to the time at which cutting out is started, and a time of the tail of the cut-out section corresponds to the time at which cutting out is completed.

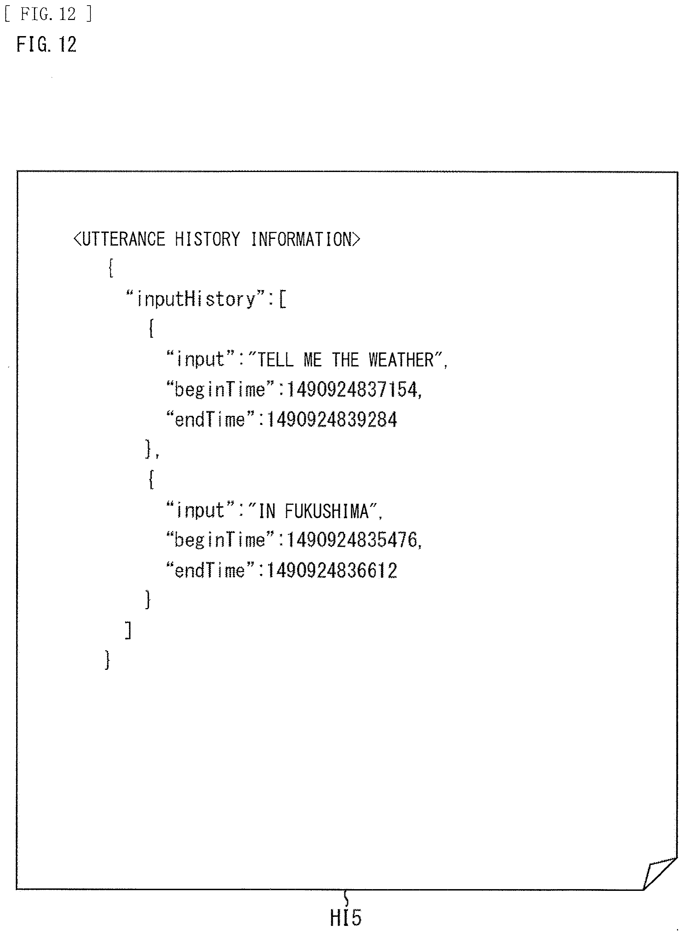

In addition, at this time, for example, the utterance history information has a content as illustrated in FIG. 12.

### <Utterance History Information (HI5)>

FIG. 12 is a diagram that illustrates an example of utterance history information.

In FIG. 12, as a first utterance history, a speech recognition result that is "tell me the weather" uttered before 'this weekend' with a 'pause' in between is set. In this first utterance history, "1490924837154" is set as utterance-start time information, and "1490924839284" is set as utterance-end time information.

In addition, as a second utterance history, a speech recognition result that is "In Fukushima" uttered before 'tell me the weather' with a 'pause' in between is set. In this second utterance history, "1490924835476" is set as utterance-start time information, and "1490924836612" is set as utterance-end time information.

### <Output (OUT5)>

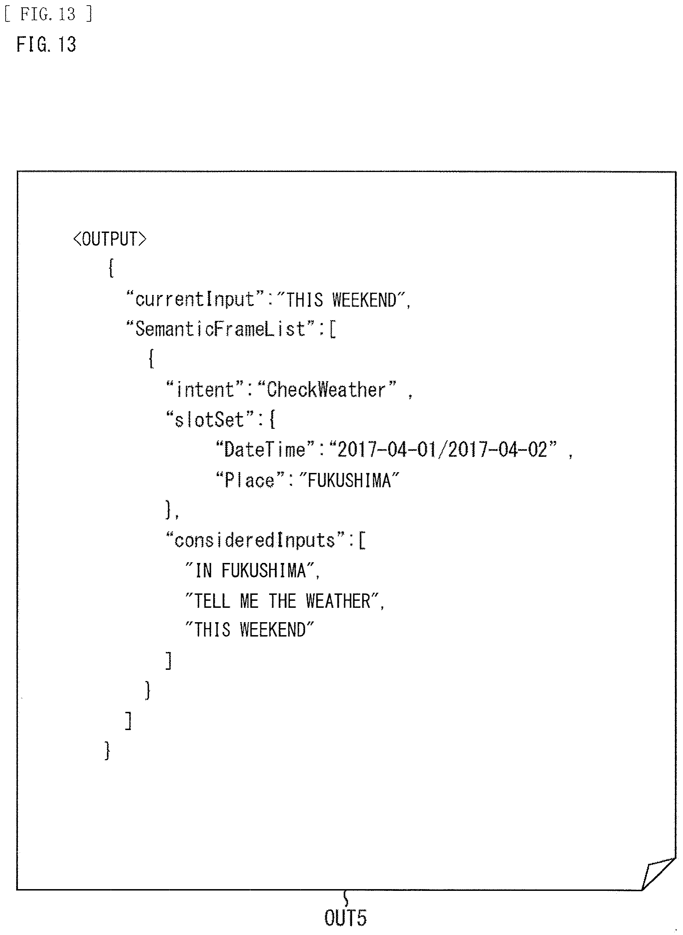

FIG. 13 illustrates an example (OUT5) of an output from the speech-recognition and spoken-language-understanding program API that performs processing on the input (IN5) including utterance history information (HI5).

In FIG. 13, a speech recognition result that is "this weekend" is obtained as "currentInput".

"CheckWeather" that is 'checking the weather' is set as the intention ("intent") of the user, and "DateTime" and "Place" are set as parameters ("slotSet") thereof. In addition, "2017-04-01/2017-04-02" is set as "DateTime", and "Fukushima" is set as "Place".

Here, "consideredlnputs" indicates that "In Fukushima", "tell me the weather", and "this weekend" are used when estimating "intent" that is "CheckWeather", "DateTime" that is "2017-04-01/2017-04-02", and "Place" that is "Fukushima". In other words, not only the most recent speech recognition result that is "this weekend", but the utterance history information (HI5) that is "In Fukushima" and "tell me the weather" are used to estimate "intent" and "slotSet".

It should be noted that, in the foregoing example, an example of a case where the most recent utterance history is connected is illustrated, but it is not always necessary to connect a history. For example, when a user utters 'Well ... tell me the weather', for example, an input (IN6) and an output (OUT6) to and from the speech-recognition and spoken-language-understanding program API are as follows.

### <Input (IN6)>

• Cut-out speech signal
• Time at which cutting out is started, and time at which cutting out is completed
• Utterance history information

For example, a waveform of a speech signal in a section that is cut out by the voice activity detection (VAD) and corresponds to 'tell me the weather' corresponds to the cut-out speech signal. In addition, a time of the head of the cut-out section corresponds to the time at which cutting out is started, and a time of the tail of the cut-out section corresponds to the time at which cutting out is completed.

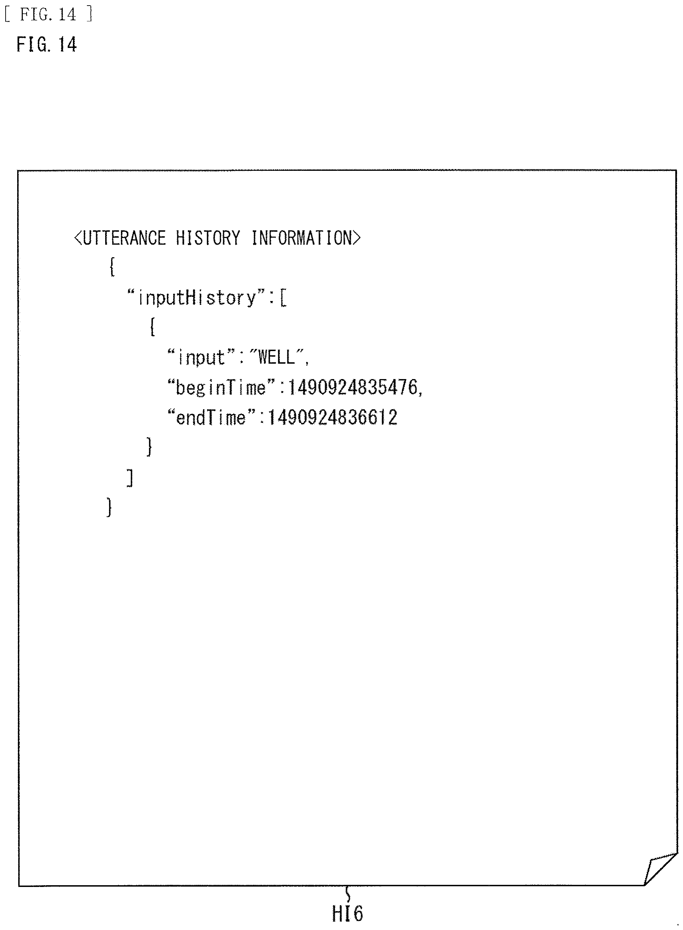

In addition, at this time, for example, the utterance history information has a content as illustrated in FIG. 14.

### <Utterance History Information (HI6)>

FIG. 14 illustrates an example of utterance history information.

In FIG. 14, "Well" that is uttered before 'tell me the weather' with a 'pause' in between is set as an utterance history. In this utterance history," 1490924835476" is set as utterance-start time information, and "1490924836612" is set as utterance-end time information.

### <Output (OUT6)>

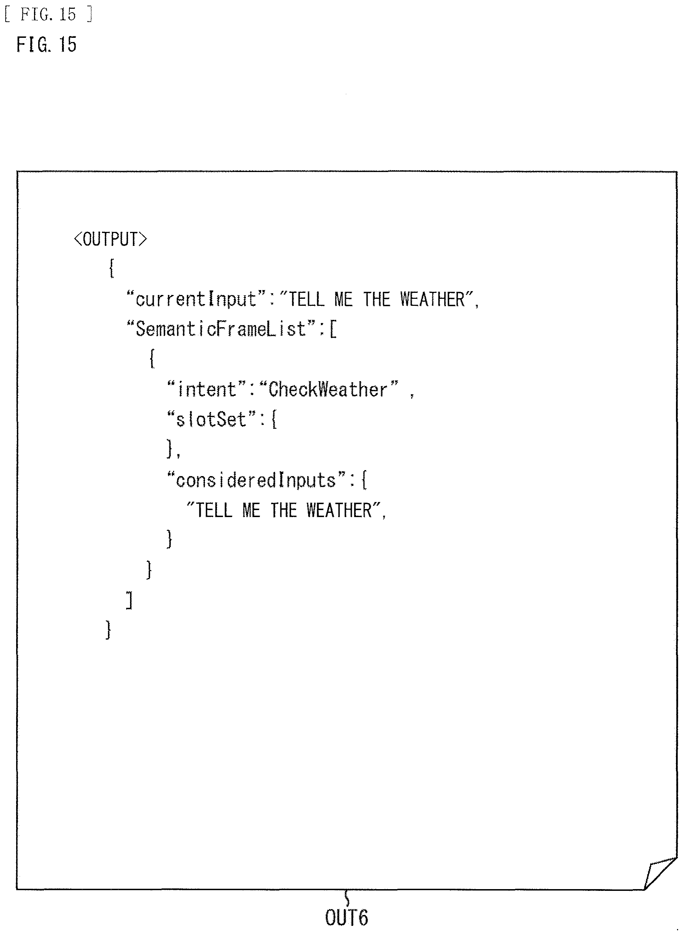

FIG. 15 illustrates an example (OUT6) of an output from the speech-recognition and spoken-language-understanding program API that performs processing on the input (IN6) including utterance history information (HI6).

In FIG. 15, a speech recognition result that is "tell me the weather" is obtained as "currentInput".

As the intention ("intent") of a user, "CheckWeather" that is 'checking the weather' is set, but no parameter is set therefor.

Here, "consideredlnputs" indicates that only "tell me the weather" is used when estimating "intent" that is "CheckWeather". In other words, the utterance history information (HI6) including 'Well' is provided as the most recent history, but is not directly related to a content about which an apparatus is instructed by a user. Therefore, the utterance history information (HI6) is not included in "consideredlnputs" .

In this manner, the present technology, using a history of the content of the most recent utterance and time information thereof, estimates the content of an instruction intended by a user even when the user makes an utterance while making a 'pause'. The following describes a specific content of the spoken-language understanding processing.

The spoken-language understanding section 103 has three information resources including a semantic frame template (Semantic Frame Template), a word dictionary (including a proper noun database), and a language model. The following also describes the semantic frame template as 'IS (Information Source) 1', the word dictionary as 'IS2', and the language model as 'IS3'.

The semantic frame template (IS1) is a template that includes a combination of "intent" and "slotSet". The semantic frame template (IS1) has a list of "intent", and is a list like, for example, ["CheckWeather", "ViewSchedule", "SendMail", ...].

Furthermore, for each "intent", "slotSet" is defined. For example, each "intent" has a corresponding application such as "CheckWeather":["DateTime", "Place"]. This means that 'the parameters supported for 'checking the weather' are 'date and time' and 'place".

The word dictionary (IS2) is a list in which what is called a word is held along with a "part of speech" and an "attribute score list" thereof. The "part of speech" is a type such as 'verb', 'noun', or 'postpositional particle'. The "attribute score list" is a list that expresses whether or not the word is probable for each "attribute", using values of 0 to 1.

There are several types of "attributes" such as a 'date', a 'place name', a 'music title', and so on each of which is designed focusing on an application of a speech user interface. In the "attribute score list", for example, the word 'tomorrow' is an expression regarding the 'date and time', and therefore a score for the "date and time" is 1, and scores for the other "attributes" each have a value close to 0.

In this word dictionary (IS2), a proper noun is also registered. The "attribute score list" for each proper noun is given on the basis of a proper noun database held therein. The proper noun database is a database that manages proper nouns of various categories (attributes) such as a place name, a facility name, a music title, a movie title, or a celebrity name. However, here, it is assumed that the music title, the movie title, and so on are constantly updated to the latest information.

In addition, for each proper noun, a recognition degree is set within a range of 0 to 1. For example, to the word 'Tokyo', a recognition degree of 1 is given as the place name 'Tokyo', a recognition degree of 0.6 is given as the music title 'Tokyo', and the like. It should be noted that the recognition degree need not be normalized between categories.

Meanwhile, coming back to a viewpoint of the word dictionary (IS2), for the proper noun, the "attribute score list" is generated in accordance with the recognition degree that is held in the proper noun database in the word dictionary (IS2). For example, in a case where the proper noun 'Fukushima' is registered in the proper noun database as a 'place name', as a 'person's name', and as a 'restaurant name', the recognition degree thereof is given as an attribute score. It should be noted that an attribute that is not registered in the proper noun database is given an attribute score of 0.

The language model (IS3) is information regarding a phrase in an utterance of a user for each "intent". For example, the language model (IS3) holds information that '"CheckWeather" includes a phrase such as 'Tell me the weather on <DateTime> in <Place>', 'Tell me the weather in <Place> on <DateTime>', ...". <Place> and <DateTime> are parameters that each express an intention of a user, and match the parameter in the foregoing semantic frame template (IS1).

Furthermore, the language model (IS3) also holds information regarding phrases and expressions for <Place> and <DateTime>. For example, the language model (IS3) holds information such as '<Place> includes a phrase such as '(place name)', 'around (place name)', ...' and '<DateTime> includes a phrase such as '(date)', '(numeral) month and (numeral) day', '(numeral) day', ... '. Here, '(place name)' is an attribute of a word and matches the "attribute" managed by the foregoing word dictionary (IS2).

It should be noted that a manner of holding these items of information may also be a form like a statistical model learned from a large corpus, other than holding as the foregoing template. In addition, a method of generating a model from a template such as a finite automaton (FSM: Finite State Machine) or a finite state transducer (FST: Finite State Transducer) may be applied.

Meanwhile, the spoken-language understanding section 103 analyzes a meaning of an instruction of a user by speech from an inputted speech recognition result (text data of an utterance), using the three resources including the foregoing semantic frame template (IS1), word dictionary (IS2), and language model (IS3).

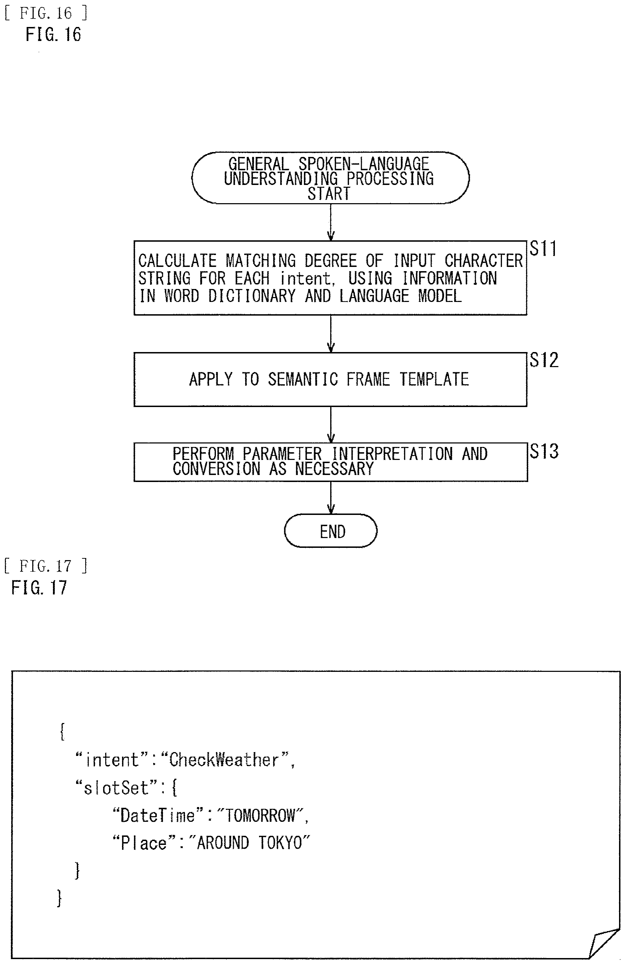

Here, first, for the purpose of comparison, a flow of general spoken-language understanding processing using no utterance history information is described. The general spoken-language understanding processing includes three steps including Steps S11 to S13 illustrated in a flowchart in FIG. 16.

(1) For each "intent", a matching degree of an input character string is calculated using information from the word dictionary (IS2) and the language model (IS3) (S11).
(2) The input character string is applied to the semantic frame template (IS1) (S12).
(3) Parameter interpretation and conversion is performed as necessary (S13).

Here, an example of processing in the spoken-language understanding processing is described in the following, assuming a case where a speech recognition result that is 'Tell me tomorrow's weather around Tokyo' is inputted.

First, in Step S11, in a case where the language model (IS3) includes a statistical model learned from a large corpus, the spoken-language understanding section 103 uses a likelihood of an input character string that is calculated by the statistical model for the matching degree.

Here, in a case of using the finite automaton (FSM), a value of 0 or 1 is taken depending on whether or not the input character string is acceptable. In addition, in a case of using the finite state transducer (FST), it is possible to calculate a score that considers a difference such as insertion, deletion, or replacement of a character when comparing the input character string with a template, or the attribute score in the word dictionary (IS2).

Whichever method is adopted, the spoken-language understanding section 103 compares the calculated score with a threshold. In a case where the score is larger than the threshold, the spoken-language understanding section 103 determines 'matched'.

Here, in a process of calculating the score, the word 'tomorrow' is given the attribute "date and time" in the word dictionary (IS2). In addition, the language model (IS3) holds information that '<DateTime> includes the phrase '(date and time)". Thus, it is determined that 'tomorrow' is appropriate for <DateTime>. Similarly, for 'around Tokyo', the language model (IS3) holds information that 'Tokyo' is a "place name", and '<Place> includes the phrase 'around (place name)', and thus it is determined that 'around Tokyo' is appropriate for <Place>.

Then, the input character string as a whole matches a template of "CheckWeather" that is 'Tell me the weather on <DateTime> in <Place>', and thus it is determined that the input character string is appropriate for "CheckWeather".

Next, in Step S12, the spoken-language understanding section 103 is able to determine, in the processing in Step S11, that the input character string is appropriate for "CheckWeather", 'tomorrow' is appropriate for <DateTime>, and 'around Tokyo' is appropriate for <Place>, thus applying these to the semantic frame template (IS1). Specifically, the spoken-language understanding section 103 applies these to a format outputted from the spoken-language understanding section 103.

Here, as illustrated in FIG. 17, "'CheckWeather"' that is checking the weather is set as the intention ("intent") of the user, and "DateTime" and "Place" are set as parameters ("slotSet") thereof. In addition, "tomorrow" and "around Tokyo" are set as "DateTime" and "Place", respectively.

Finally, in Step S13, the spoken-language understanding section 103 performs parameter interpretation and conversion as necessary.

For example, it is not possible to process the expression 'tomorrow' as is depending on an application, and the expression is thus converted into a specific year-month-day format. If the date is March 31, 2017, 'tomorrow' is April 1, 2017. Accordingly, a predefined format is used to express the date designated by a user as April 1, 2017.

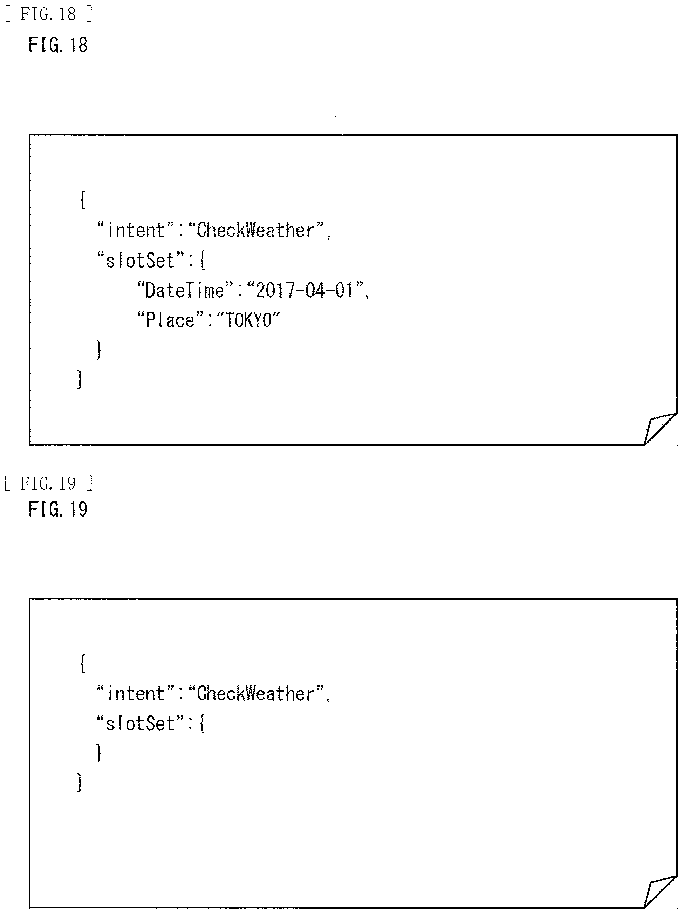

In addition, in a case where it is possible to determine that, when checking the weather, information 'around' included in the expression 'around Tokyo' is often unnecessary, the portion 'around' is deleted. In other words, in a case where a user says 'Tokyo' or in a case were where a user says 'around Tokyo', whichever the case may be, the expressions are unified into 'Tokyo' to allow the application to perform similar processing. As a result, for example, the spoken-language understanding section 103 outputs a result as illustrated in FIG. 18.

In other words, in FIG. 18, as compared to FIG. 17, "DateTime" that is a parameter for "CheckWeather" that is 'checking the weather' is changed from "tomorrow" to "2017-04-01", and "Place" is changed from "around Tokyo" to "Tokyo".

The foregoing processing in Steps S11 to S13 in FIG. 16 is a flow of the general spoken-language understanding processing. Meanwhile, in the spoken-language understanding processing according to the present technology, utterance history information is used, but it is necessary to determine whether or not to consider a past utterance history.

For example, a case is assumed where a user makes an utterance such as 'For tomorrow ... tell me the weather' while making a 'pause' after 'For tomorrow'. In this case, analysis processing is performed on each of 'tell me the weather' that is a current input and 'For tomorrow, tell me the weather' that is coupled to an utterance one history ago. Here, 'tell me the weather' and 'For tomorrow, tell me the weather' are each treated as an input hypothesis.

It should be noted that, at this time, for example, in a case where two pieces of utterance history information are given, analysis processing is performed with three input hypotheses including a first input hypothesis using only a current input, a second input hypothesis that is obtained by combining only one utterance history, and a third input hypothesis that is a combination of both utterance histories.

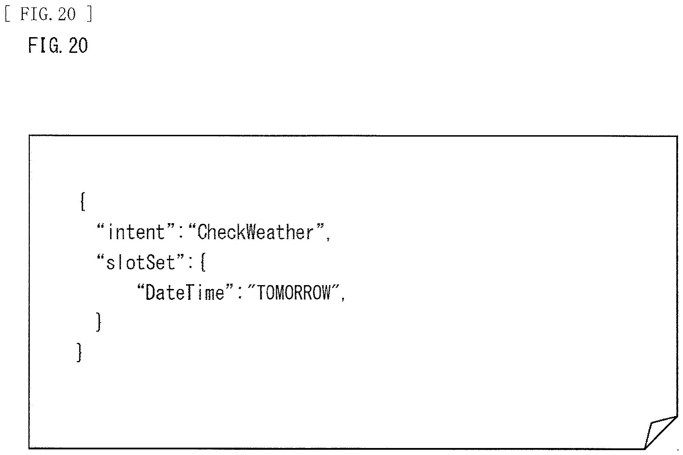

Then, an analysis result in a case of processing the first input hypothesis that is 'tell me the weather' turns out as illustrated in FIG. 19. On the other hand, an analysis result in a case of processing the second input hypothesis that is 'For tomorrow, tell me the weather' turns out as illustrated in FIG. 20.

Which of the hypotheses is to be finally outputted is determined on the basis of a reference as to 'which information is larger in amount' (an amount of information obtained for each input hypothesis). "CheckWeather" has two parameters <DateTime> and <Place>, and in a case of the first input hypothesis that is 'tell me the weather', neither of the two parameters is present (0/2), whereas in a case of the second input hypothesis that is 'For tomorrow, tell me the weather', one parameter is given (1/2).

Accordingly, it is determined that the most recent utterance history that is 'For tomorrow' is related to the intention of the user that 'wants to check the weather'. In other words, in the foregoing example, it is possible to perform determination from a ratio of the given parameters "0/2" and "1/2".

However, even when combining utterance histories, a case where an amount of information does not increase, a case where combined information is unnatural as a sentence, etc. are assumed. For example, for an input that is 'Well ... tell me the weather in Tokyo', the amount of information does not increase whether or not 'Well' is combined. In this case, for example, a shorter input hypothesis that is 'tell me the weather in Tokyo' is selected.

Therefore, here, for example, it is assumed that the input hypotheses are compared with each other by considering the following four scores, to perform a final selection.

(1) First score: a ratio of parameters given to "intent" of each input hypothesis
(2) Second score: score based on the language model (IS3) for each input hypothesis
(3) Third score: in each input hypothesis, a difference in time between the oldest past utterance history and the second oldest past utterance history
(4) Fourth score: the number of combinations of the respective input hypotheses

It should be noted that, as the second score, for example, in a case where, as the language model (IS3), the information that 'Tell me the weather on <DateTime> in <Place>' is held for "'CheckWeather", when 'For tomorrow, tell me the weather in Tokyo' is uttered, the score is deducted because of a missing postpositional particle.

In addition, for example, in a case where one utterance history is combined, the third score is a difference between a current time and a time in the history. In addition, for example, in a case where two utterance histories are combined, the third score is a difference between a time one history ago and a time two histories ago. Here, in a case of using only the current input, it is possible to determine the score to be "0".

In addition, for example, in a case of using only the current input, the fourth score is determined to be "0", and in a case where only one utterance history is combined, the fourth score is determined to be "1".

However, in the spoken-language understanding section 103, for example, it is possible to determine that the first and the second scores having larger values are more favorable, and the third and the fourth scores having smaller values are more favorable. In other words, determination here prevents utterances before and after a 'pause' from being combined (coupled) at random.

Then, in the spoken-language understanding section 103, when performing a comparison and a final selection, for example, it is possible to use a method of performing rule processing such as a decision tree (Decision Tree) while comparing values of these scores with each other, or use a method of designing a function to calculate a final score from the values of the four scores and using the function.

It should be noted that the foregoing first to fourth scores are examples of various scores, and a portion of the first to the fourth scores may be used, or another score may be further used. In addition, when calculating a score, score-calculating process may be performed after removing a falter in wording (what is called a filler), for example, such as 'Well'.

### (Flow of Spoken-Language Understanding Processing)

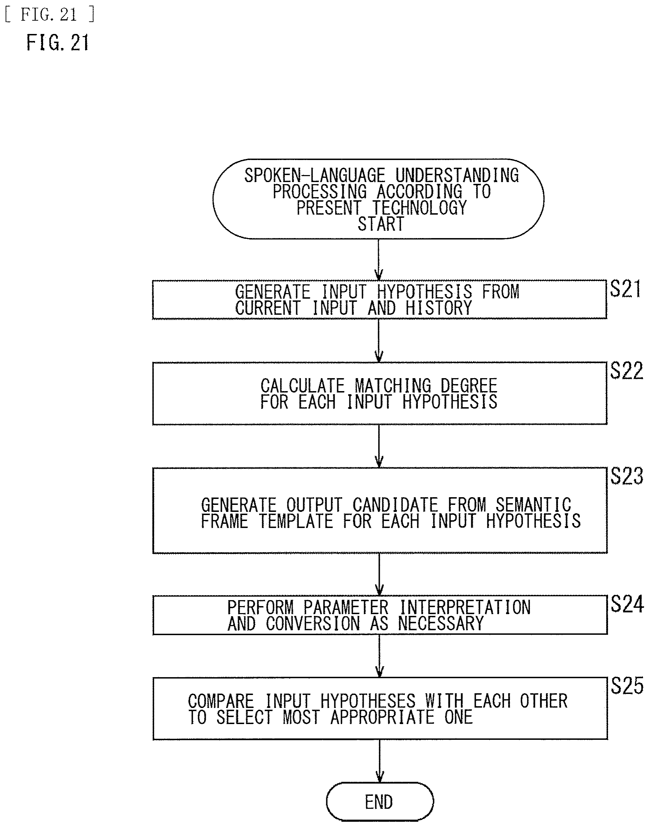

Next, with reference to a flowchart in FIG. 21, a flow of spoken-language understanding processing using utterance history information according to the present technology is described.

In Step S21, the spoken-language understanding section 103 generates an input hypothesis from the current input and utterance history information on the basis of a speech recognition result from the speech recognition section 102.

Here, for example, in a case where a user makes an utterance like 'For tomorrow ... tell me the weather' while making a 'pause' after 'For tomorrow', the first input hypothesis that is 'tell me the weather' and the second input hypothesis that is 'For tomorrow, tell me the weather' are generated.

In Step S22, the spoken-language understanding section 103 calculates a matching degree for each of the input hypotheses generated in the processing in Step S21.

Here, for example, for each of the first input hypotheses that is 'tell me the weather' and the second input hypothesis that is 'For tomorrow, tell me the weather', the first to the fourth scores are calculated. For example, calculating these scores makes it possible to obtain a matching degree that includes at least one of a relevance or a grammatical connection between the utterances before and after the 'pause'.

In Step S23, the spoken-language understanding section 103 generates an output candidate from the semantic frame template (IS1) for each of the input hypotheses (for example, the first input hypothesis and the second input hypothesis) generated in the processing in Step S21.

In Step S24, the spoken-language understanding section 103 performs parameter interpretation and conversion as necessary. Here, for example, if 'the day' is March 31, 2017, 'tomorrow' is April 1, 2017. Therefore, a predetermined format is used to express the date and time designated by a user is April 1, 2017.

In Step S25, the spoken-language understanding section 103 compares the input hypotheses with each other and selects the most appropriate one.

Here, for example, the first input hypothesis that is 'tell me the weather' and the second input hypothesis that is 'For tomorrow, tell me the weather' are compared, thus making it possible to select the second input hypothesis that is 'For tomorrow, tell me the weather' and has a larger amount of information. In other words, even in a case where a user makes an utterance like 'For tomorrow ... tell me the weather' while making a 'pause' after 'For tomorrow', it is possible to say, in the second input hypothesis, that the intention of the user is correctly read instead of separately interpreting the utterances before and after the 'pause'.

Thus, a flow of the spoken-language understanding processing according to the present technology has been described above.

### (Another Example of Selecting Input Hypothesis)

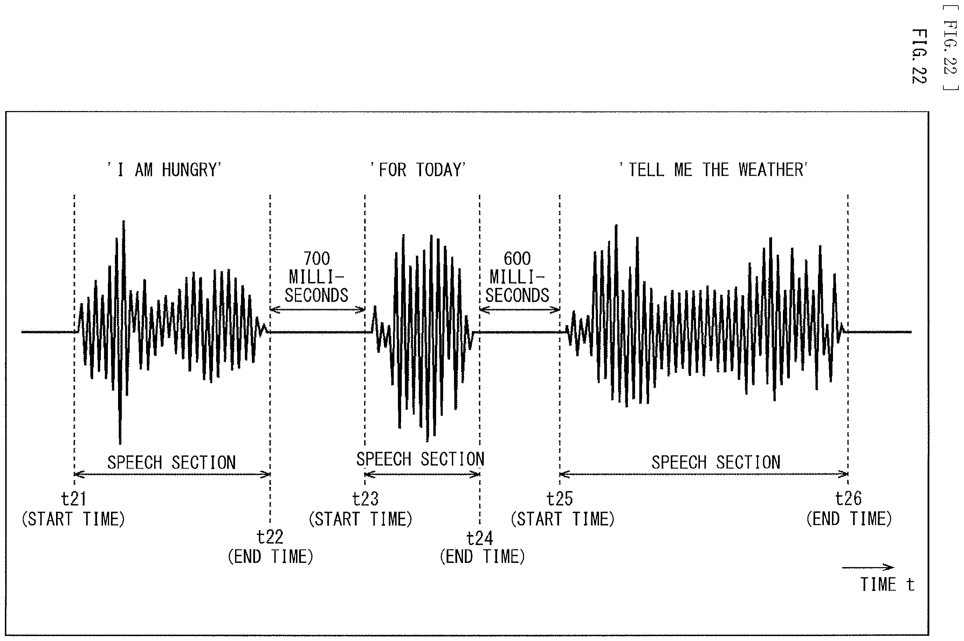

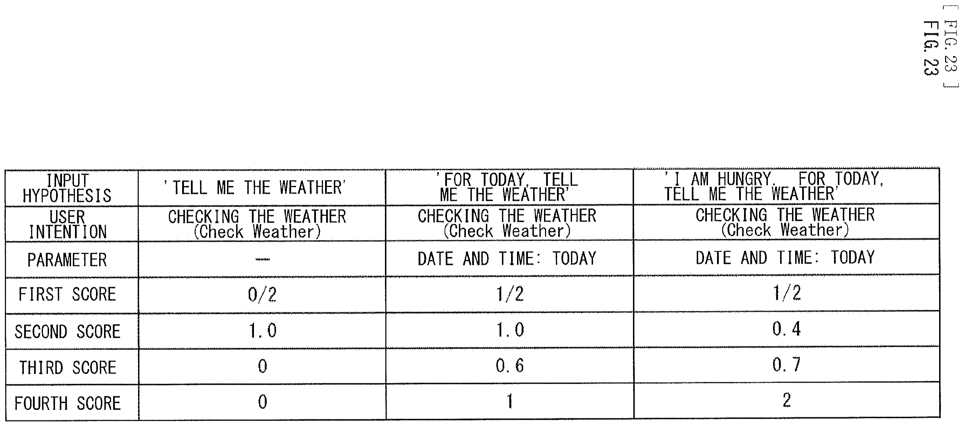

Next, another example of selecting an input hypothesis is described with reference to FIGs. 22 and 23. Here, for example, a case is assumed where a user makes an utterance like 'I am hungry ... For today ... tell me the weather' while making a 'pause' after 'I am hungry' and after 'For today'.

In other words, in the foregoing example, a case of including one 'pause' and using an utterance history one utterance ago has been described. Here, however, as another example of selecting an input hypothesis, a case of including two 'pauses' and using an utterance history one utterance ago and an utterance history two utterances ago is described.

FIG. 22 illustrates an example of a waveform of a speech signal in a case where 'I am hungry ... For today ... tell me the weather' is uttered.

The waveform of the speech signal illustrated in FIG. 22 includes a 'pause' after 'I am hungry', and the input stops for about 700 milliseconds. Thus, in the signal processing section 101, a section from a start time t21 to an end time t22 that corresponds to an utterance of 'I am hungry' and a section from a start time t23 to an end time t24 that corresponds to an utterance of 'For today' are cut out as separate speech sections.

In addition, 'For today' is followed by a 'pause', and the input stops for about 600 milliseconds. Thus, in the signal processing section 101, a section from a start time t23 to an end time t24 that corresponds to an utterance of 'For today' and a section from a start time t25 to an end time t26 that corresponds to an utterance of 'tell me the weather' are cut out as separate speech sections.

At this time, the current input is 'tell me the weather' and past utterance histories are 'I am hungry' and 'For today'. Thus, in the spoken-language understanding section 103, for example, 'tell me the weather', 'For today, tell me the weather', and 'I am hungry. For today, tell me the weather' are generated respectively as the first input hypothesis, the second input hypothesis, and the third input hypothesis (S21 in FIG. 21).

Next, the spoken-language understanding section 103 calculates a matching degree for each of the first to the third input hypotheses, and further generates an output candidate from the semantic frame template (IS1) (S22 and S23 in FIG. 21).

Here, for example, the matching degree is calculated by obtaining the foregoing first to fourth scores. FIG. 23 illustrates an example of a score for each input hypothesis.

In FIG. 23, for the first input hypothesis that is 'tell me the weather', "CheckWeather" that is 'checking the weather' is set as the intention of a user, but the parameter thereof is set as 'None'. At this time, there is no information for either "DateTime" or "Place" that is a parameter for "CheckWeather", offering 0/2 as the first score.

In addition, 1.0 is obtained as the second score for the first input hypothesis because there is no particular element that is subject to deduction as a score based on the language model (IS3). Furthermore, for the first input hypothesis, only the current input that is 'tell me the weather' is used, and 0 is thus obtained for each of the third and the fourth scores.

Next, for the second input hypothesis that is 'For today, tell me the weather', "CheckWeather" that is 'checking the weather' is set, and the date and time "today" is set as a parameter thereof. At this time, of "DateTime" and "Place" that are parameters for "CheckWeather", one item of information that is "DateTime" is given, and thus 1/2 is obtained as the first score.

In addition, 1.0 is obtained as the second score for the second input hypothesis because there is no particular element that is subject to deduction as a score based on the language model (IS3). Furthermore, for the second input hypothesis, not only the current input that is 'tell me the weather', but also the utterance history that is 'For today' is used, and 0.6 seconds (600 milliseconds) that indicates a difference between the current time and a time in the history is thus obtained as the third score. In addition, for the second input hypothesis, one utterance history is combined with the current input, and 1 is thus obtained as the fourth score.

Next, for the third input hypothesis that is 'I am hungry. For today, tell me the weather', "CheckWeather" that is 'checking the weather' is set, and the date and time "today" is set as a parameter thereof. At this time, of "DateTime" and "Place" that are parameters for "CheckWeather", one item of information that is "DateTime" is given, and thus 1/2 is obtained as the first score.

In addition, as the second score for the third input hypothesis, 0.4 is obtained after deduction as a score based on the language model (IS3). Furthermore, for the third input hypothesis, not only the current input that is 'tell me the weather', but also the utterance history that is 'For today' and "I am hungry" is used, and 0.7 seconds (700 milliseconds) that indicates a difference between a time one history ago and a time two histories ago is thus obtained as the third score. In addition, for the third input hypothesis, two utterance histories are combined with the current input, and 2 is thus obtained as the fourth score.

At this time, for example, if 'the day' is March 31, 2017, 'tomorrow' is April 1, 2017. Thus, the spoken-language understanding section 103 converts 'tomorrow' to 'April 1, 2017' as the date and time designated by a user (S24 in FIG. 21). Then, in accordance with the matching degree thus obtained, the spoken-language understanding section 103 compares the input hypotheses with each other to select the most appropriate one (S25 in FIG. 21).

Here, the first and the second scores having larger values are more favorable, and the third and the fourth scores having smaller values are more favorable. Thus, while comparing the numerical values of these scores with each other, the input hypothesis to be finally outputted is selected using rule processing such as a decision tree, a predetermined function, etc. For example, in the example in FIG. 23, the second input hypothesis that is 'For today, tell me the weather' is selected as the most appropriate one, and an output corresponding to the second input hypothesis is performed.

It should be noted that, in another example of selecting an input hypothesis as illustrated in each of FIGs. 22 and 23, there is a 'pause' for about 700 milliseconds after 'I am hungry', and then 'For today' is uttered. Furthermore, there is a 'pause' for about 600 milliseconds after 'For today', and then 'tell me the weather' is uttered. A time interval of about 600 milliseconds or 700 milliseconds like these is to be recognized as a 'pause'. However, for example, there is a case where a time interval such as several tens of seconds or several minutes is not to be recognized as a 'pause'.

Then, here, for example, a time interval between utterances before and after the time interval is compared with a threshold. In a case where the time interval is larger than the threshold, the time interval, instead of being recognized as a 'pause', may be excluded from an input hypothesis when the input hypothesis is generated without using the targeted utterance history.

As the first embodiment, it has been described above that the spoken-language understanding processing using utterance history information makes it possible to understand an intention of a user from an utterance (utterance including a 'pause') of the user, making it possible to provide a speech interaction of higher convenience.

### (2) Second Embodiment

Next, analysis processing using other modal information is described. For example, in an apparatus shared among family members, for example, a case where the utterance 'My ... I want to check the schedule for next week' is made is assumed. In this case, without linguistic knowledge that the word 'My' is first-person and information indicating who is a speaker, it is not possible for an application to determine whose schedule is to be displayed from among those for the family members.

In a second embodiment, image data obtained from the sensor 54 (FIG. 2) provided in the speech processing apparatus 10 is analyzed to recognize who is a speaker, and a result of the recognition is received, thereby making it possible to identify a specific person indicated by 'My'.

Here, for example, as described above, when 'I want to check the schedule for next week' is uttered while a 'pause' is made after 'My' is uttered, an input (IN10) and an output (OUT10) to and from the speech-recognition and spoken-language-understanding program API are as follows.

### <Input (IN10)>

• Cut-out speech signal
• Time at which cutting out is started, and time at which cutting out is completed
• Utterance history information (character string of a speech recognition result, and start time of cutting out of a corresponding speech signal)
• Other sensor information

For example, a waveform of a speech signal in a section that is cut out by the voice activity detection (VAD) and corresponds to 'I want to check the schedule for next week' corresponds to the cut-out speech signal. In addition, a time of the head of the cut-out section corresponds to the time at which cutting out is started, and a time of the tail of the cut-out section corresponds to the time at which cutting out is completed.

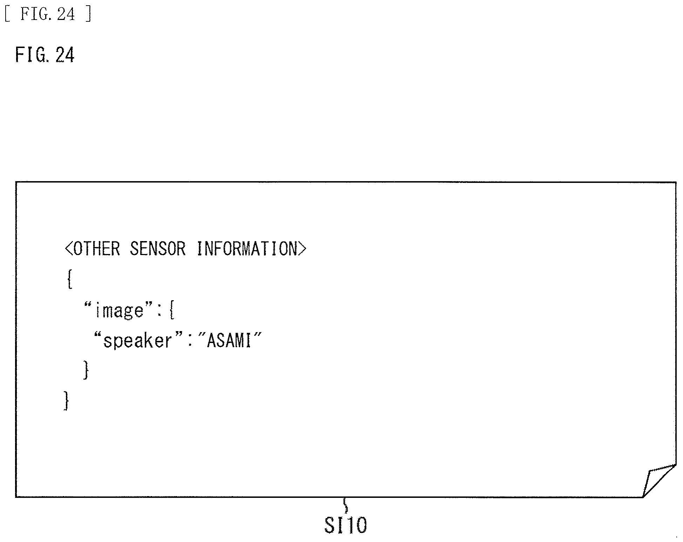

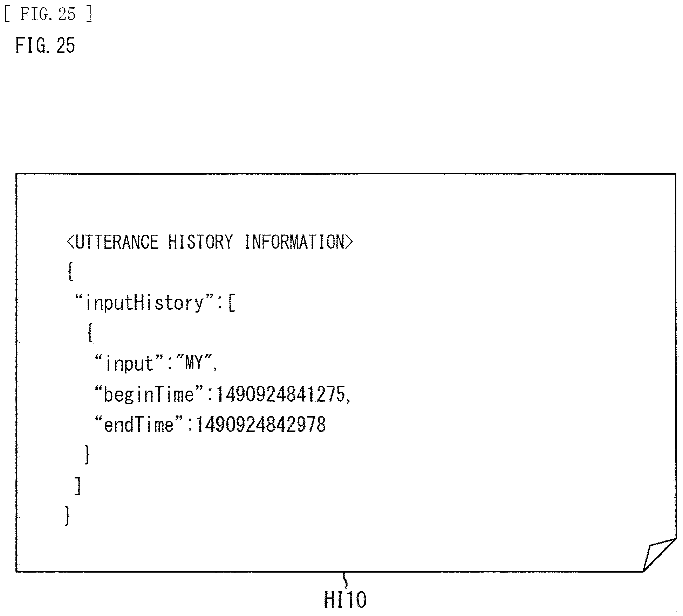

In addition, other sensor information includes information regarding the speaker that is obtained from image data, which has a content as illustrated in FIG. 24, for example. Furthermore, utterance history information includes, as a past utterance history, a character string of a speech recognition result and a start time of cutting out of a corresponding speech signal, which has a content as illustrated in FIG. 25, for example.

### <Other Sensor Information (SI10)>

FIG. 24 is a diagram that illustrates an example of other sensor information.

"image" represents sensor information that is obtained from image data, and "speaker" is included as an object thereof.

For "speaker", a character string indicating the speaker that is obtained from an analysis result of the image data is set. Here, information that 'the speaker is "Asami"' is obtained from the image data obtained by the sensor 54 (FIG. 2), and "Asami" who has uttered 'My ... I want to check the schedule for next week' is set as the speaker.

### <Utterance History Information (HI10)>

FIG. 25 is a diagram that illustrates an example of utterance history information.

In FIG. 25, as an utterance history, "My" that is uttered before 'I want to check the schedule for next week' with a 'pause' in between is set. In this utterance history, "1490924841275" is set as utterance-start time information, and " 1490924842978" is set as utterance-end time information.

### <Output (OUT10)>

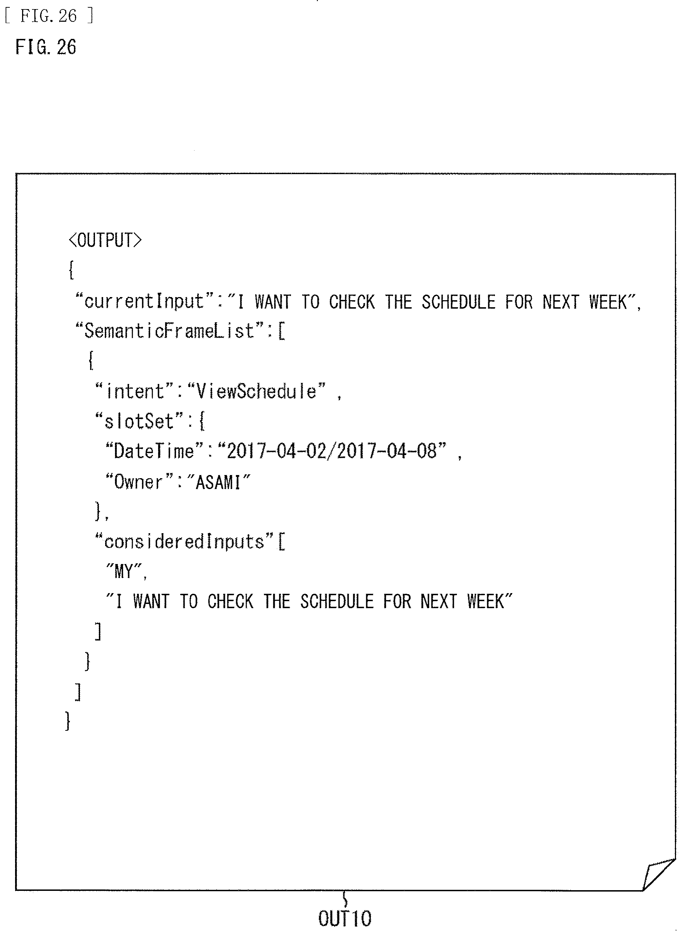

FIG. 26 is a diagram that illustrates an example (OUT10) of the output from the speech-recognition and spoken-language-understanding program API that performs processing that corresponds to the input (IN10) including other sensor information (SI10) and utterance history information (HI10).

In FIG. 26, as "currentlnput", a speech recognition result that is "I want to check the schedule for next week" is obtained.

"ViewSchedule" that is 'schedule display' is set as the intention ("intent") of the user, and "DateTime" and "Owner" are set as parameters ("slotSet") thereof. In addition, "2017-04-02/2017-04-08" is set as "DateTime", and "Asami" is set as "Owner".

Here, "consideredlnputs" indicates that "My" and "I want to check the schedule for next week" are used when estimating "intent" that is "ViewSchedule", "DateTime" that is "2017-04-02/2017-04-08", and "Owner" that is "Asami". In other words, "intent" and "slotSet" are estimated using not only the most recent speech recognition result that is "I want to check the schedule for next week", but also the utterance history information (HI10) that is "My" and the other sensor information (SI10) including the speaker that is "Asami".

In other words, here, using the other sensor information (SI10) makes it possible to replace 'My' with 'Asami'. It should be noted that this replacement processing corresponds to the parameter interpretation and conversion processing in Step S24 in FIG. 21, and the parameter 'My' is converted into 'Asami', thereby identifying 'My' as 'Asami'.

It should be noted that a case of using, as other sensor information, an analysis result of image data obtained from the sensor 54 (FIG. 2) serving as an image sensor has been described here, but an analysis result of sensor data that is obtained from another sensor such as a magnetic sensor or an acceleration sensor may be used. Furthermore, in a case where latitude/longitude information that is calculated from a GPS (Global Positioning System) signal is obtained, for example, it is possible to convert the phrase 'this town' included in an utterance of a user into a specific city name such as 'Tokyo' or 'Yokohama'.

As the second embodiment, it has been described above that the spoken-language understanding processing using other sensor information along with utterance history information makes it possible to understand an intention of a user from an utterance (utterance including a 'pause') of the user.

### (Speech Dialog Processing)

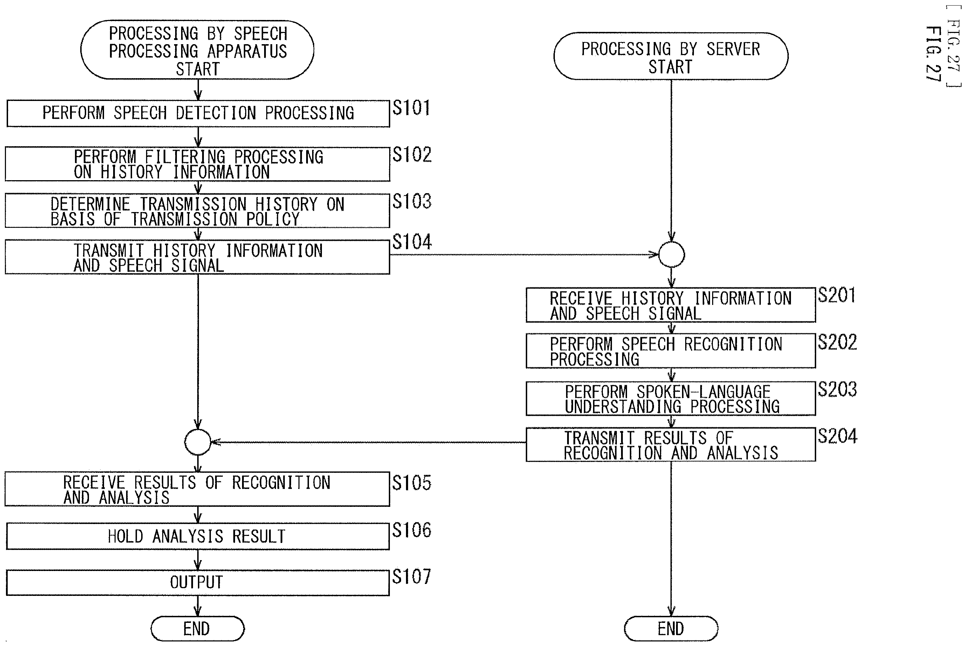

Finally, with reference to a flowchart in FIG. 27, a flow of speech dialog processing that is executed by the speech processing apparatus 10 and the server 20 is described.

It should be noted that, in FIG. 27, processing in Steps S101 to S107 is executed by the speech processing apparatus 10 on a local side, and processing in Steps S201 to S204 is executed by the server 20 on a cloud side.

In Step S101, the signal processing section 101 in the processor 51 performs speech detection processing on a speech signal that is obtained by converting a sound collected by the microphone 52 and inputted thereto.

In Step S102, the processor 51 performs filtering processing on the utterance history information. In this filtering processing, for example, an utterance history is extracted on the basis of extraction information including a time interval between 'pauses' or a filler, information (speaker information) regarding the speaker, and information (line-of-sight information) regarding a line of sight of the user.

In other words, here, an utterance history that matches the utterance history used in the spoken-language understanding processing executed by the server 20 on the cloud side is to be sorted out. It should be noted that a filler is a falter in wording, which includes a word such as 'well' or 'you know', for example.

In Step S103, the processor 51 determines an utterance history (transmission history) of a transmission target on the basis of a transmission policy. In this processing for determining a transmission history, for example, an utterance history that is to be actually transmitted is determined from among utterance histories extracted in the filtering processing in Step S102 in accordance with a predefined transmission policy such as a maximum number of utterance histories for transmission (for example, 10 histories at most, and so on) or a maximum data size of utterance histories for transmission (for example, 2 MB at most, and so on).

In Step S104, in accordance with control from the processor 51, the communication I/F 55 transmits to the server 20, via the Internet 30, the utterance history information determined in the processing in Step S103 along with the speech signal obtained in the processing in Step S101. It should be noted that the sensor data obtained from the sensor 54 (FIG. 2) may be transmitted here.

In Step S201, in accordance with control from the processor 71, the I/F communication I/F 72 receives the utterance history information and the speech signal that are transmitted from the speech processing apparatus 10 via the Internet 30.

In Step S202, the speech recognition section 102 in the processor 71 performs speech recognition processing on the speech signal received in the processing in Step S201.

In Step S203, the spoken-language understanding section 103 in the processor 71 performs spoken-language understanding processing on the basis of the utterance history information received in the processing in Step S201 and the speech recognition result obtained in the processing in Step S202.

It should be noted that, as this spoken-language understanding processing, for example, processing including the spoken-language understanding processing according to the present technology as illustrated in FIG. 21 is performed. In addition, for example, other sensor information based on the sensor data obtained from the sensor 54 (FIG. 2) may be used here.

In Step S204, in accordance with control from the processor 71, the communication I/F 72 transmits to the speech processing apparatus 10, via the Internet 30, results of the recognition and analysis obtained in the processing in Step S203.

In Step S105, in accordance with control from the processor 51, the communication I/F 55 receives, via the Internet 30, the results of the recognition and analysis transmitted from the server 20.

In Step S106, the processor 51 holds the results of the recognition and analysis received in the processing in Step S105, for example, by recording the results on a memory and the like.

In Step S107, in accordance with control from the processor 51, the speaker 53 outputs a speech that corresponds to (a speech signal of) the results of the recognition and analysis received in the processing in Step S105. It should be noted that the speech processing apparatus 10 is not limited to outputting a speech from the speaker 53, but may display, for example, text information, image information, or the like corresponding to the results of the recognition and analysis in the display section.

Thus, a flow of the speech dialog processing has been described above.

In this speech dialog processing, in the server 20 on the cloud side, spoken-language understanding processing is performed using the utterance history information corresponding to the foregoing first or second embodiment. This makes it possible to understand the intention of a user from an utterance (utterance including a 'pause') of the user, making it possible to provide a speech interaction of higher convenience.

In addition, in this speech dialog processing, in the speech processing apparatus 10 on the local side, utterance history information that is to be transmitted to the server 20 on the cloud side is sorted out, and is transmitted in accordance with the transmission policy, thus making it possible to reduce a data amount thereof. For example, in a case where the speech processing apparatus 10 is a mobile apparatus, even in a case of being unable to secure a sufficient bandwidth for the mobile communication, it is possible to transmit the utterance history information reliably.

It should be noted that the description in FIG. 27 illustrates a case where the utterance history information is managed by the speech processing apparatus 10 on the local side, but the utterance history information may be managed for each user by the server 20 on the cloud side.

### <4. Modification Example>

The foregoing description has illustrated a case of inputting, as an input (IN) to the speech-recognition and spoken-language-understanding program API, a time at which cutting out is started and a time at which cutting out is completed along with a cut-out speech signal. However, for example, of start and end times of cutting out, for example, only the time at which cutting out is completed may be inputted.

In addition, the foregoing description has illustrated, in the second embodiment, a case of inputting, as an input (IN) to the speech-recognition and spoken-language-understanding program API, utterance history information and other sensor information along with the speech signal and the cut-out time. However, without using utterance history information, only other sensor information may be inputted along with the speech signal and the cut-out time. In addition, here, delay information indicating a difference in time may be used.

In the foregoing description, the signal processing section 101 (FIG. 4) has been described as being incorporated in the processor 51 (FIG. 2) in the speech processing apparatus 10 on the local side, and the speech recognition section 102 (FIG. 4) and the spoken-language understanding section 103 (FIG. 4) have been described as being incorporated in the processor 71 (FIG. 3) in the server 20 on the cloud side. However, each of the signal processing section 101 to the spoken-language understanding section 103 in FIG. 4 may be incorporated in any of the speech processing apparatus 10 and the server 20.

For example, all of the signal processing section 101 to the spoken-language understanding section 103 in FIG. 4 may be incorporated on the speech processing apparatus 10 side to cause processing to be completed on the local side. However, even in a case where such a configuration is adopted, each type of database may be held in the server 20 on the Internet 30. In addition, for example, all of the signal processing section 101 to the spoken-language understanding section 103 in FIG. 4 may be incorporated on the server 20 side to cause raw data of the speech collected by the speech processing apparatus 10 to be transmitted to the server 20 via the Internet 30.

It should be noted that, in the foregoing description, JSON (JavaScript (registered trademark) Object Notation) has been described as an example of a format of an output (OUT) from the speech-recognition and spoken-language-understanding program API, but, for example, another format such as XML (Extensible Markup Language) may be used. In addition, the format of the output (OUT) is not limited to a text format, but may be a binary format.

### <5. Configuration of Computer>

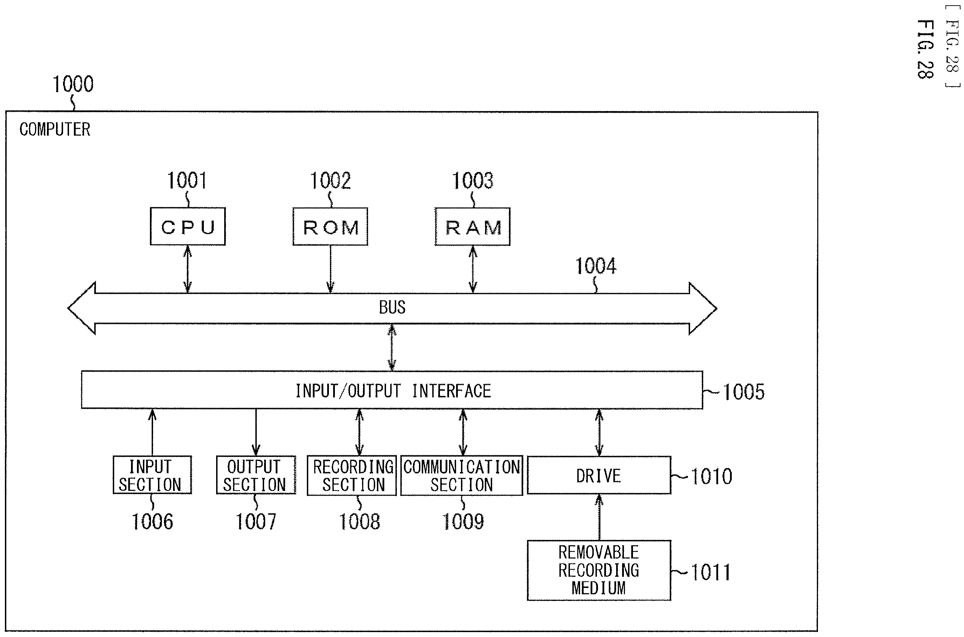

It is possible to execute a series of processing (for example, the spoken-language understanding processing illustrated in FIG. 21, or the like) as described above by hardware or by software. In a case where the series of processing is executed by software, a program included in the software is installed in a computer of each apparatus. FIG. 28 is a block diagram illustrating an example of a configuration of the hardware of a computer that executes the series of processing described above with a program.

In the computer 1000, CPU (Central Processing Unit) 1001, ROM (Read Only Memory) 1002, and RAM (Random Access Memory) 1003 are coupled to each other by a bus 1004. An input/output interface 1005 is further coupled to the bus 1004. An input section 1006, an output section 1007, a recording section 1008, a communication section 1009, and a drive 1010 are coupled to the input/output interface 1005.

The input section 1006 includes a keyboard, a mouse, a microphone, and the like. The output section 1007 includes a display, a speaker, and the like. The recording section 1008 includes a hard disk, a nonvolatile memory, and the like. The communication section 1009 includes a network interface, and the like. The drive 1010 drives a removable recording medium 1011 such as a magnetic disk, an optical disc, a magneto-optical disk, or a semiconductor memory.

In the computer 1000 configured as described above, the CPU 1001 loads a program that is recorded in the ROM 1002 or the recording section 1008 onto the RAM 1003 via the input/output interface 1005 and the bus 1004, and executes the program, thereby performing the series of processing described above.

For example, it is possible to record and provide a program to be executed by the computer 1000 (CPU 1001) in the removable recording medium 1011 that is a packaged medium or the like. In addition, it is possible to provide a program via a wired or wireless transmission medium such as a local area network, the Internet, or digital satellite broadcasting.

In the computer 1000, mounting the removable recording medium 1011 onto the drive 1010 makes it possible to install a program in the recording section 1008 via the input/output interface 1005. In addition, it is possible to receive the program with the communication section 1009 via a wired or wireless transmission medium, and install the program in the recording section 1008. In addition, it is possible to install the program in advance in the ROM 1002 or the recording section 1008.

Here, in this specification, processes performed by a computer in accordance with a program do not necessarily have to be performed in time series in the order described as a flowchart. That is, the processes performed by the computer in accordance with the program also include processes executed in parallel or individually executed (for example, parallel processes or object-based processes). Furthermore, the program may be processed by one computer (processor), or distributed to and processed by a plurality of computers.

It should be noted that embodiments of the present technology are not limited to the above described embodiments, and various modifications may be made to them without departing from the scope of the present technology. For example, it is possible for the present technology to adopt the configuration of cloud computing in which one function is distributed to a plurality of apparatuses via a network and processed in cooperation.

In addition, other than executing by one apparatus, it is possible to cause a plurality of apparatuses to share and cooperatively execute each step in the spoken-language understanding processing illustrated in FIG. 21 and the speech dialog processing in FIG. 27. Further, in a case where a plurality of processes is included in one step, it is possible to execute the plurality of processes included in the one step with one apparatus and it is also possible to distribute the plurality of processes to a plurality of apparatuses for execution.

Additionally, the present technology may also be configured as below.

(1) An information processing apparatus including
   a processor that couples utterances before and after a pause in accordance with a matching degree between the utterances before and after the pause in terms of a semantic unit, the pause being included in an utterance of a user.
(2) The information processing apparatus according to (1), in which the processor calculates, on the basis of a current utterance and a past utterance history, the matching degree between the utterances before and after the pause in terms of the semantic unit,
   determines, on the basis of the calculated matching degree, whether or not to couple the utterances before and after the pause, and
   couples the utterances before and after the pause in a case where it is determined that the utterances before and after the pause are coupled.
(3) The information processing apparatus according to (2), in which the processor calculates the matching degree between the utterances before and after the pause in terms of the semantic unit, using sensor information along with the current utterance and the past utterance history, the sensor information being obtained from a sensor.
(4) The information processing apparatus according to (2) or (3), in which the processor calculates a score for each of input hypotheses, the input hypotheses being each obtained by hypothetically coupling the utterances before and after the pause,
   calculates a matching degree for each of the input hypotheses between the utterances before and after the pause on the basis of the calculated score for each of the input hypotheses, and
   selects one input hypothesis from among a plurality of input hypotheses on the basis of the calculated matching degree for each of the input hypotheses.
(5) The information processing apparatus according to (4), in which the processor calculates the score in accordance with an amount of information obtained for each of the input hypotheses.
(6) The information processing apparatus according to (4) or (5), in which the score includes, for each of the input hypotheses, at least one or more of
   a first score that is obtained from a ratio of use of a function parameter corresponding to an intention of the user,
   a second score that is obtained from a language model related to information regarding a phrase in the utterance of the user,
   a third score that is obtained from a temporal interval between the current utterance and the past utterance history, or a temporal interval between the past utterance histories, or
   a fourth score that is obtained from a number of combinations of the current utterance and the past utterance history.
(7) The information processing apparatus according to any of (1) to (6), in which the matching degree includes at least one of a relevance or a grammatical connection between the utterances before and after the pause.
(8) The information processing apparatus according to any of (2) to (7), in which the processor determines, on the basis of an interval between the pauses, whether or not to couple the utterances before and after the pause.
(9) The information processing apparatus according to (2), in which the processor uses only an effective utterance history out of the past utterance histories.
(10) The information processing apparatus according to (9), in which the past utterance history includes information regarding a content of the utterance of the user and a time at which the utterance is made.
(11) The information processing apparatus according to (3), in which the sensor information includes image data or position information, the image data being obtained by imaging an object, the position information indicating a position of the user.
(12) An information processing method for an information processing apparatus, the information processing method including, by the information processing apparatus,
   coupling utterances before and after a pause in accordance with a matching degree between the utterances before and after the pause in terms of a semantic unit, the pause being included in an utterance of a user.
(13) An information processing apparatus including:
   a processor that extracts, from past utterance histories of a user, a past utterance history that matches spoken-language understanding processing on an utterance including a pause; and
   a transmission section that transmits the extracted past utterance history to an information processing apparatus along with a speech signal corresponding to a current utterance of the user, the information processing apparatus performing the spoken-language understanding processing.
(14) The information processing apparatus according to (13), in which the processor extracts the past utterance history on the basis of extraction information including a time interval between pauses, information regarding a falter in wording, information regarding a speaker, or line-of-sight information regarding the user.
(15) The information processing apparatus according to (13) or (14), in which the transmission section transmits the past utterance history on the basis of a maximum number of the past utterance histories for transmission or a maximum data size of the past utterance history for transmission.
(16) An information processing method for an information processing apparatus, the information processing method including, by the information processing apparatus:
   extracting, from past utterance histories of a user, a past utterance history that matches spoken-language understanding processing on an utterance including a pause; and
   transmitting the extracted past utterance history to an information processing apparatus along with a speech signal corresponding to a current utterance of the user, the information processing apparatus performing the spoken-language understanding processing.

### Reference Signs List

1 Speech dialog system, 10 Speech processing apparatus, 20 Server, 30 Internet, 51 Processor, 52 Microphone, 53 Speaker, 54 Sensor, 55 Communication I/F, 71 Processor, 72 Communication I/F, 73 Database, 101 Signal processing section, 102 Speech recognition section, 103 Spoken-language understanding section, 1000 Computer, 1001 CPU

## Claims

1. An information processing apparatus comprising
a processor that couples utterances before and after a pause in accordance with a matching degree between the utterances before and after the pause in terms of a semantic unit, the pause being included in an utterance of a user.

2. The information processing apparatus according to claim 1, wherein the processor calculates, on a basis of a current utterance and a past utterance history, the matching degree between the utterances before and after the pause in terms of the semantic unit,
determines, on a basis of the calculated matching degree, whether or not to couple the utterances before and after the pause, and
couples the utterances before and after the pause in a case where it is determined that the utterances before and after the pause are coupled.

3. The information processing apparatus according to claim 2, wherein the processor calculates the matching degree between the utterances before and after the pause in terms of the semantic unit, using sensor information along with the current utterance and the past utterance history, the sensor information being obtained from a sensor.

4. The information processing apparatus according to claim 2, wherein the processor calculates a score for each of input hypotheses, the input hypotheses being each obtained by hypothetically coupling the utterances before and after the pause,
calculates a matching degree for each of the input hypotheses between the utterances before and after the pause on a basis of the calculated score for each of the input hypotheses, and
selects one input hypothesis from among a plurality of input hypotheses on a basis of the calculated matching degree for each of the input hypotheses.

5. The information processing apparatus according to claim 4, wherein the processor calculates the score in accordance with an amount of information obtained for each of the input hypotheses.

6. The information processing apparatus according to claim 5, wherein the score includes, for each of the input hypotheses, at least one or more of
a first score that is obtained from a ratio of use of a function parameter corresponding to an intention of the user,
a second score that is obtained from a language model related to information regarding a phrase in the utterance of the user,
a third score that is obtained from a temporal interval between the current utterance and the past utterance history, or a temporal interval between the past utterance histories, or
a fourth score that is obtained from a number of combinations of the current utterance and the past utterance history.

7. The information processing apparatus according to claim 1, wherein the matching degree includes at least one of a relevance or a grammatical connection between the utterances before and after the pause.

8. The information processing apparatus according to claim 2, wherein the processor determines, on a basis of an interval between the pauses, whether or not to couple the utterances before and after the pause.

9. The information processing apparatus according to claim 2, wherein the processor uses only an effective utterance history out of the past utterance histories.

10. The information processing apparatus according to claim 9, wherein the past utterance history includes information regarding a content of the utterance of the user and a time at which the utterance is made.

11. The information processing apparatus according to claim 3, wherein the sensor information includes image data or position information, the image data being obtained by imaging an object, the position information indicating a position of the user.

12. An information processing method for an information processing apparatus, the information processing method comprising, by the information processing apparatus,
coupling utterances before and after a pause in accordance with a matching degree between the utterances before and after the pause in terms of a semantic unit, the pause being included in an utterance of a user.

13. An information processing apparatus comprising:
a processor that extracts, from past utterance histories of a user, a past utterance history that matches spoken-language understanding processing on an utterance including a pause; and
a transmission section that transmits the extracted past utterance history to an information processing apparatus along with a speech signal corresponding to a current utterance of the user, the information processing apparatus performing the spoken-language understanding processing.

14. The information processing apparatus according to claim 13, wherein the processor extracts the past utterance history on a basis of extraction information including a time interval between pauses, information regarding a falter in wording, information regarding a speaker, or line-of-sight information regarding the user.

15. The information processing apparatus according to claim 14, wherein the transmission section transmits the past utterance history on a basis of a maximum number of the past utterance histories for transmission or a maximum data size of the past utterance history for transmission.

16. An information processing method for an information processing apparatus, the information processing method comprising, by the information processing apparatus:
extracting, from past utterance histories of a user, a past utterance history that matches spoken-language understanding processing on an utterance including a pause; and
transmitting the extracted past utterance history to an information processing apparatus along with a speech signal corresponding to a current utterance of the user, the information processing apparatus performing the spoken-language understanding processing.
